(19) Europäisches Patentamt

European Patent Office

Office européen des brevets

(11) **EP 4 730 694 A1**

(12) **EUROPEAN PATENT APPLICATION**

(43) Date of publication:
**22.04.2026 Bulletin 2026/17**

(21) Application number: **25208495.9**

(22) Date of filing: **14.10.2025**

(51) International Patent Classification (IPC):
*H04L 9/00* (2022.01)      *H04L 9/30* (2006.01)

(52) Cooperative Patent Classification (CPC):
**H04L 9/008; H04L 9/3093;** H04L 2209/50

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **15.10.2024 KR 20240140626**
**29.09.2025 KR 20250140860**

(71) Applicant: **CRYPTO LAB INC.**
**Gwanak-gu, Seoul 08826 (KR)**

(72) Inventors:
• **Cheon, Jung Hee**
**Seoul 08826 (KR)**
• **Jang, Daehyun**
**Cheonan-si 31089 (KR)**

(74) Representative: **Dragotti & Associati S.P.A.**
**Via Nino Bixio, 7**
**20129 Milano (IT)**

(54) **ELECTRONIC APPARATUS AND CONTROL METHOD THEREOF**

(57)      An electronic apparatus is disclosed. The apparatus includes: a memory storing instructions; a communication interface; and at least one processor including processing circuitry, wherein the at least one processor is configured to obtain a plurality of user data and a plurality of verification random data by replicating user data and verification random data into the plurality of user data and the plurality of verification random data, respectively, when the user data is obtained, obtain a plurality of ciphertext sets by encrypting the plurality of user data and the plurality of verification random data, respectively, under different secret keys, and control the communication interface to transmit the plurality of ciphertext sets to a server.

# FIG. 3

100

EP 4 730 694 A1

**Description**

[Technical Field]

The present disclosure relates to an electronic apparatus and a control method thereof, and more particularly, to an electronic apparatus for obtaining a plurality of ciphertext sets and a control method thereof.

[Background Art]

Various types of electronic apparatus have been developed due to advances in electronic technology. In particular, in recent years, most encryption and decryption technologies for information security have been developed due to advances in communication technologies.

When a message encrypted using encryption technology is transmitted to a counterpart, the counterpart is required to perform decryption to use the message. In this case, resource and time waste may occur during a process of decrypting the encrypted data. In addition, a decrypted message in a temporarily decrypted state for operation may be hacked.

Homomorphic Encryption (HE) has been studied to resolve these problems. According to Homomorphic Encryption (HE), a result identical to a value obtained by performing an operating on a plaintext and then encrypting the result may be obtained even when an operation is performed on a ciphertext itself without decrypting encrypted information. That is, according to homomorphic encryption, various operations may be performed on a ciphertext in a state where the ciphertext is not decrypted.

In particular, a Verifiable Homomorphic Encryption (VHE) scheme refers to a technology that couples two operation security technologies: verifiable computation and homomorphic encryption. However, such technology is cryptographically unsafe. In particular, this scheme is slow to a level unsuitable for real use and low in cryptographic safety.

[Disclosure of Invention]

[Solution to Problem]

According to an embodiment of the present disclosure, provided is an electronic apparatus including: a memory storing instructions; a communication interface; and at least one processor including processing circuitry, wherein the at least one processor is configured to obtain a plurality of user data and a plurality of verification random data by replicating user data and verification random data into the plurality of user data and the plurality of verification random data, respectively, when the user data is obtained, obtain a plurality of ciphertext sets by encrypting the plurality of user data and the plurality of verification random data, respectively, under different secret keys, and control the communication interface to transmit the plurality of ciphertext sets to a server.

The at least one processor may be configured to receive a homomorphic operation result from the server through the communication interface, and identify validity of the homomorphic operation result by performing a decryption and verification procedure on the homomorphic operation result.

The at least one processor may be configured to identify the validity of the homomorphic operation result by identifying whether a result corresponding to the plurality of verification random data in the homomorphic operation result matches a pre-stored value.

The at least one processor may be configured to identify the validity of the homomorphic operation result by identifying whether a plurality of results respectively corresponding to the plurality of user data in the homomorphic operation result match one another.

The at least one processor may be configured to invalidate the homomorphic operation result and provide an error state when an attack attempt is identified through the verification procedure.

The at least one processor may be configured to rearrange the plurality of user data and the plurality of verification random data according to a random permutation rule, and obtain the plurality of ciphertext sets by encrypting the plurality of rearranged user data and the plurality of rearranged verification random data, respectively, under different secret keys.

The at least one processor may be configured to perform encryption and operation on each component in the plurality of ciphertext sets under different secret keys and evaluation keys corresponding to the secret keys.

The at least one processor may be configured to update the plurality of ciphertext sets by inserting random padding or additional random number elements into the plurality of ciphertext sets, and control the communication interface to transmit the plurality of updated ciphertext sets to the server.

According to an embodiment of the present disclosure, provided is a control method of an electronic apparatus, the method including: obtaining a plurality of user data and a plurality of verification random data by replicating user data and verification random data into the plurality of user data and the plurality of verification random data, respectively, when the user data is obtained; obtaining a plurality of ciphertext sets by encrypting the plurality of user data and the plurality of verification random data, respectively, under different secret keys; and transmitting the plurality of ciphertext sets to a server.

The method may further include: receiving a homomorphic operation result from the server; and identifying validity of the homomorphic operation result by performing a decryption and verification procedure on the homomorphic operation result.

The identifying of the validity may include identifying the validity of the homomorphic operation result by identifying whether a result corresponding to the plurality of verification random data in the homomorphic operation result matches a pre-stored value.

The identifying of the validity may include identifying the validity of the homomorphic operation result by identifying whether a plurality of results respectively corresponding to the plurality of user data in the homomorphic operation result match one another.

The method may further include invalidating the homomorphic operation result and providing an error state when an attack attempt is identified through the verification procedure.

The obtaining of the plurality of ciphertext sets may include rearranging the plurality of user data and the plurality of verification random data according to a random permutation rule, and obtaining the plurality of ciphertext sets by encrypting the plurality of rearranged user data and the plurality of rearranged verification random data, respectively, under different secret keys.

The obtaining of the plurality of ciphertext sets may include performing encryption and operation on each component in the plurality of ciphertext sets under different secret keys and evaluation keys corresponding to the secret keys.

The method may further include: updating the plurality of ciphertext sets by inserting random padding or additional random number elements into the plurality of ciphertext sets; and transmitting the plurality of updated ciphertext sets to the server.

According to an embodiment of the present disclosure, provided is non-transitory computer-readable recording medium storing a program for executing a method for operating an electronic apparatus, wherein the method includes obtaining a plurality of user data and a plurality of verification random data by replicating user data and verification random data into the plurality of user data and the plurality of verification random data, respectively, when the user data is obtained, obtaining a plurality of ciphertext sets by encrypting the plurality of user data and the plurality of verification random data, respectively, under different secret keys, and transmitting the plurality of ciphertext sets to a server.

[Brief Description of Drawings]

FIG. 1 is a diagram illustrating a structure of a network system according to an embodiment of the present disclosure.
FIG. 2 is a diagram illustrating a structure of a network system according to an embodiment of the present disclosure.
FIG. 3 is a block diagram illustrating a configuration of an electronic apparatus according to an embodiment of the present disclosure.
FIGS. 4 to 11 are diagrams sequentially illustrating operations of the electronic apparatus according to various embodiments of the present disclosure.
FIG. 12 is a flowchart illustrating a control method of an electronic apparatus according to an embodiment of the present disclosure.

[Mode for Invention]

Hereinafter, the present disclosure is described in detail with reference to the accompanying drawings.

Terms used in an embodiment of the present disclosure are selected as generally used terms in consideration of their functions in the present disclosure, and may be changed based on the intention of those skilled in the art or a judicial precedent, the emergence of a new technique, or the like. In addition, in a specific case, terms arbitrarily chosen by an applicant may exist. In this case, the meanings of such terms are mentioned in detail in corresponding descriptions of the disclosure. Therefore, the terms used in the disclosure need to be defined on the basis of the meanings of the terms and the contents throughout the disclosure rather than simple names of the terms.

In the present disclosure, the expression such as "have", "may have", "include" , or "may include", indicates the presence of a corresponding feature (e.g., a numerical value, a function, an operation, or a component such as a part), and does not exclude the presence of an additional feature.

An expression such as "at least one of A or/and B" may indicate either "A or B", or "both of A and B."

Expressions such as "first" and "second," used in the disclosure may indicate various components regardless of the sequence or importance of the components. The expression is used only to distinguish one component from another component, and does not limit the corresponding component.

A term of a singular number may include its plural number unless explicitly indicated otherwise in the context. It should be understood that in this application, terms such as "include" or "have" indicate that the presence of the features, numbers, steps, operations, components, parts, or combinations thereof, which are described in the specification, and do not preclude the presence or addition of one or more other features, numbers, steps, operations, components, parts, or combinations thereof.

In the present disclosure, a term such as a "user" may refer to a person who uses a projection device or an apparatus (e.g., an artificial intelligence electronic apparatus) which uses the projection device.

Hereinafter, various embodiments of the disclosure are described in more detail with reference to the accompanying drawings.

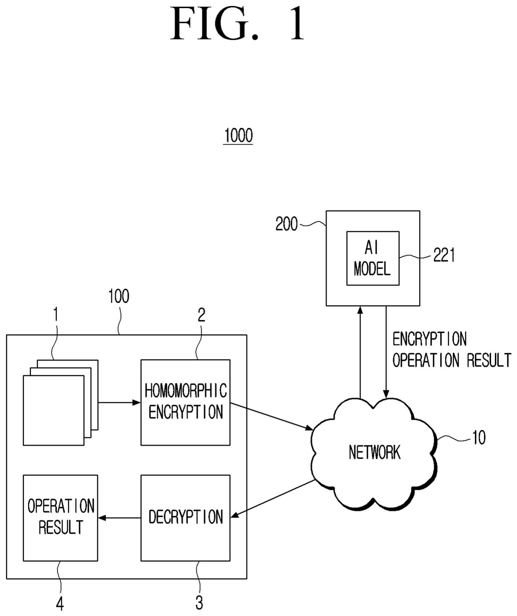

FIG. 1 is a diagram illustrating a structure of a network system 1000 according to an embodiment.

Referring to FIG. 1, an electronic apparatus 100 and a server 200 may communicate with each other through a network 10. The network 10 may be implemented as various types of wired or wireless communication networks, broadcasting communication networks, optical communication networks, cloud networks, or the like, and respective devices may also be connected to each other by using methods such as wireless fidelity (Wi-Fi), Bluetooth, and near-field communication (NFC) without a separate medium.

FIG. 1 illustrates one electronic apparatus 100. However, the electronic apparatus 100 may be implemented as a plurality of various types. For example, the electronic apparatus 100 may be implemented as various types of devices such as a smartphone, a tablet, a personal computer (PC), a laptop PC, a home server, a kiosk, a game player, or a camera. In addition, the electronic apparatus 100 may be implemented as a home appliance product using internet of things (IoT) functions.

For example, when including a camera, the electronic apparatus 100 may directly capture and obtain at least one original data 1. When including no camera, the electronic apparatus 100 may receive the original data 1 from an external device (e.g., a camera or a memory stick) through various wired or wireless interfaces and store the original data 1. In various embodiments of the present disclosure, the original data 1 may refer to a photographic image, yet is not limited thereto, and may also refer to a graphic image. Alternatively, the original data 1 may refer to video content including a plurality of image frames.

The electronic apparatus 100 may perform homomorphic encryption 2 on at least one original data to obtain a homomorphic ciphertext and then transmit the homomorphic ciphertext to the server 200 through the network 10.

In this case, the original data 1 may be hacked and leaked to outside during a process in which the original data 1 is transmitted, or may be leaked by an administrator of the server 200. However, when the original data is transmitted in a homomorphic ciphertext form, the original data may not be identified even when leaked to outside. Accordingly, security may be enhanced for personal information or physical characteristics of the user.

Various homomorphic encryption algorithms may be provided for generating a homomorphic ciphertext. However, the various embodiments of the present disclosure describe cases in which homomorphic encryption is performed using a Cheon-Kim-Kim-Song (CKKS) scheme or an algorithm modified based thereon.

The electronic apparatus 100 may perform encoding to transmit the original data in a homomorphic ciphertext form. In homomorphic encryption, encoding refers to an operation of converting data into an encryptable format. Homomorphic encryption may be performed based on a mathematical structure (e.g., a polynomial operation), and may thus convert the original data 1 into a form processable using the homomorphic encryption algorithm and then perform homomorphic encryption thereon.

Homomorphic encryption may generally use a slot encoding scheme and a coefficient encoding scheme.

Slot encoding refers to a scheme that allocates data to be encrypted to a plurality of slots and then encodes the data in an entire-slot unit. A slot refers to a data unit stored in parallel in one homomorphic ciphertext. When a ciphertext is expressed in a polynomial form, coefficients or roots included in the polynomial may serve as respective slots. When one ciphertext includes a total of n slots, n values may be encoded or operated simultaneously. That is, when slot encoding is performed, a parallel operation (parallel computation) may be performed on a homomorphic ciphertext. The slot encoding scheme may vary according to a homomorphic encryption algorithm. The CKKS scheme described above may perform slot encoding by using a Fast Fourier Transform (FFT).

Coefficient encoding refers to a scheme that converts data to be encrypted into a polynomial form and converts coefficients included in the polynomial into encrypted values. The CKKS scheme described above may perform coefficient encoding by using a Discrete Fourier Transform (DFT).

The server 200 refers to a device that performs an operation, in a homomorphic encrypted state, on a homomorphic ciphertext (i.e., at least one homomorphically encrypted original data) provided from the electronic apparatus 100 and provides a result of an encrypted operation. The server 200 may be implemented in various forms such as a web server or a cloud server.

An artificial intelligence (AI) model 221 for performing an operation in an encrypted state may be stored in the server 200. As described above, when the original data is received and an operation based on the original data is to be performed, the AI model 221 may correspond to a convolutional neural network (CNN), yet is not necessarily limited thereto.

Specifically, the AI model 221 may perform various operations on a homomorphic ciphertext encrypted using a homomorphic encryption scheme (e.g., the CKKS Scheme) and output an operation result in a homomorphic ciphertext form. Hereinafter, an operation result output in a homomorphic ciphertext form is referred to as the result of an encrypted operation.

When the AI model 221 is implemented as a convolutional neural network (CNN), the AI model 221 of the server 200 may perform a depthwise convolution operation or a convolution operation by using model parameters on a homomorphic ciphertext transmitted from the electronic apparatus 100. This operation method is described in detail in a portion below.

The server 200 may transmit a result of an encrypted operation to the electronic apparatus 100 through the network 10. The electronic apparatus 100 may perform decryption 3 on a received result of the encrypted operation and provide the user with an operation result 4. A method for providing the result may vary according to types and configurations of the electronic apparatus 100.

For example, when including a display therein or being connected to an external display (e.g., a monitor), the electronic apparatus 100 may display a decrypted operation result 4.

For example, when including a speaker, the electronic apparatus 100 may output a voice message corresponding to the operation result through the speaker.

For example, when performing communication with another terminal device (e.g., a smartphone), the electronic apparatus 100 may transmit a decrypted operation result to a terminal device.

For example, when the AI model 221 is a trained model for diagnosing a disease, the operation result may include information on presence or absence of a disease, a type of a disease, or a progress state of a disease based on the original data 1 from the user.

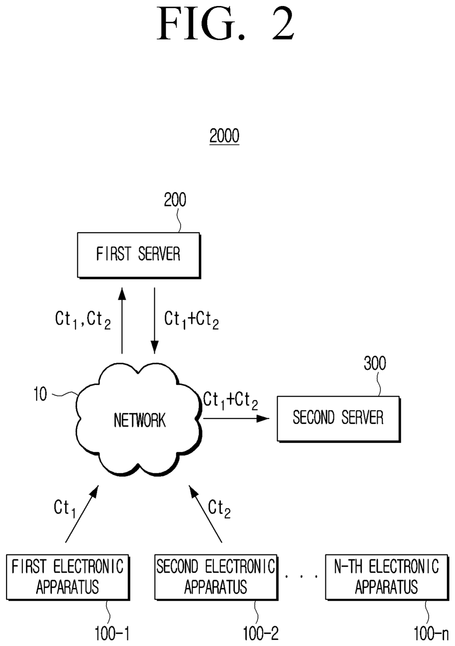

FIG. 2 is a diagram illustrating a structure of a network system 2000 according to an embodiment of the present disclosure.

Referring to FIG. 2, the network system may include a plurality of electronic apparatuses 100-1 to 100-n, a first server 200, and a second server 300, and the respective components may be connected to each other through the network 10.

The network 10 may be implemented in various forms such as wired or wireless communication networks, broadcasting communication networks, optical communication networks, or cloud networks, and the respective devices may be connected to each other by using methods such as wireless fidelity (Wi-Fi), Bluetooth, or near-field communication (NFC) without a separate medium.

FIG. 2 illustrates the plurality of electronic apparatuses 100-1 to 100-n. However, a plurality of electronic apparatus may not be necessarily required and one apparatus may be used. For example, the electronic apparatuses 100-1 to 100-n may be implemented as various types of devices such as a smartphone, a tablet, a game player, personal computer (PC), a laptop PC, a home server, or a kiosk. In addition, the electronic apparatus 100 may be implemented as a home appliance product using internet of things (IoT) functions.

The user may input various information through the electronic apparatuses 100-1 to 100-n used by the user. Input information may be stored in the electronic apparatuses 100-1 to 100-n themselves, or may be transmitted to an external device and stored in the external device due to a reason such as a storage capacity or security. As illustrated in FIG. 2, the first server 200 may serve to store such information, and the second server 300 may serve to use some or all of the information stored in the first server 200.

Each of the electronic apparatuses 100-1 to 100-n may perform homomorphic encryption on the input information and transmit a homomorphic ciphertext to the first server 200.

Each of the electronic apparatuses 100-1 to 100-n may include encryption noise, that is, an error, obtained during a process of performing homomorphic encryption, in a ciphertext. In detail, the homomorphic ciphertext generated in each of the electronic apparatuses 100-1 to 100-n may be generated to restore a result value including a message and an error value when the ciphertext is decrypted under a secret key.

For example, a homomorphic ciphertext generated in the electronic apparatuses 100-1 to 100-n may satisfy the following property when the ciphertext is decrypted under a secret key.

[Equation 1]

$$Dec(ct, sk) = <ct, sk> = M+e \pmod q$$

Here, < , > denotes an inner product operation (i.e., a usual inner product), ct denotes a ciphertext, sk denotes a secret key, M denotes a plaintext message, e denotes an encryption error value, and mod q denotes a ciphertext modulus. q needs to be selected to be greater than a result value M obtained by multiplying a scaling factor $\triangle$ by the message. When an absolute value of the error value e is sufficiently smaller than M, a decrypted value M + e of the ciphertext may be a value that may replace an original message by the same precision in a significant figure operation. In the decrypted data, the error may be disposed on the least significant bit (LSB), and M may be disposed on the next least significant bit.

When a message size is too small or too large, the size may be adjusted using the scaling factor. When the scaling factor is used, not only an integer-type message yet also a real-number-type message may be encrypted, and its usability may thus be greatly increased. In addition, the message size may be adjusted using the scaling factor to thus also adjust a size of an effective region, that is, a region where the messages are present in the ciphertext after the operation is performed.

According to an embodiment, the ciphertext modulus q may be set and used in various forms. For example, the ciphertext modulus may be set in a form of an exponential power $q=\triangle L$ of the scaling factor $\triangle$. When $\triangle$ is 2, the modulus may be set to a value such as $q=210$.

In addition, the homomorphic ciphertext according to the disclosure is described assuming that fixed point-numbers are used. However, the homomorphic ciphertext may also be applied even to a case where floating-point numbers are used.

The first server 200 may store the received homomorphic ciphertext in a ciphertext state without decrypting the ciphertext.

The second server 300 may request a specific processing result for the homomorphic ciphertext from the first server 200. The first server 200 may perform a specific operation based on the request from the second server 300 and then transmit its result to the second server 300.

For example, when ciphertexts ct1 and ct2 transmitted from the two display apparatuses 100-1 and 100-2 are stored in the first server 200, the second server 300 may request the first server 200 for a value obtained by combining information provided by the two display apparatuses 100-1 and 100-2. The first server 200 may perform an operation for combining the two ciphertexts based on the request and then transmit a result value ct1 + ct2 to the second server 300.

Due to a property of homomorphic ciphertext, the first server 200 may perform the operation without decrypting the ciphertext, and the result value may also be generated in a ciphertext form. In the present disclosure, the result value obtained by the operation is referred to as an operation result ciphertext.

The first server 200 may transmit the operation result ciphertext to the second server 300. The second server 300 may decrypt the received operation result ciphertext to thus obtain an operation result value of data included in each homomorphic ciphertext.

Accordingly, the electronic apparatus 100 may perform an efficient multiplication operation while minimizing the number of Residual Number System (RNS) moduli, thereby enabling a faster operation on the homomorphic ciphertex.

Meanwhile, FIG. 2 illustrates a case where the first electronic apparatus and the second electronic apparatus perform encryption and the second server performs decryption. However, the present disclosure is not necessarily limited thereto.

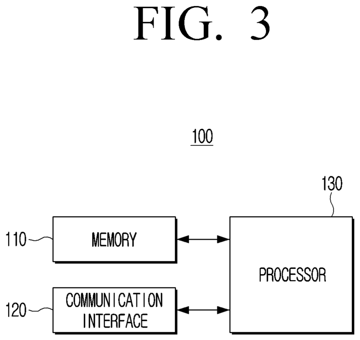

FIG. 3 is a block diagram illustrating a configuration of the electronic apparatus 100 according to an embodiment of the present disclosure.

Referring to FIG. 3, the electronic apparatus 100 may include a memory 110 storing instructions, a communication interface 120, and at least one processor 130. At least one processor 130 may perform the following operations by executing instructions.

The memory 110 may refer to hardware storing information such as data in an electrical or magnetic form for the processor 130 or the like to access the data. To this end, the memory 110 may be implemented as at least one hardware selected from a non-volatile memory, a volatile memory, a flash memory, a hard disk drive (HDD), a solid state drive (SSD), a random access memory (RAM), a read only memory (ROM), or the like.

The memory 110 may store at least one instruction necessary for operating the electronic apparatus 100 or the processor 130. Here, the instruction includes a code unit indicating an operation of the electronic apparatus 100 or the processor 130, and may be written in machine language, which is a language that a computer may understand. Alternatively, the memory 110 may store a plurality of instructions for performing a specific operation of the electronic apparatus 100 or the processor 130 as an instruction set.

The memory 110 may store data in units of bits or bytes which may represent characters, numbers, images, or the like. For example, the memory 110 may store data to be encrypted, encrypted data, or the like.

The memory 110 may be accessed by the processor 130, and the processor 130 may perform the readout, recording, correction, deletion, update, or the like of the instructions, the instruction set, or the data.

The communication interface 120 refers to a component for performing communication with various types of external devices by using various types of communication methods. For example, the electronic apparatus 100 may communicate with the server 200 through the communication interface 120.

The communication interface 120 may include a Wi-Fi module, a Bluetooth module, an infrared communication module, or a wireless communication module. Here, each communication module may be implemented as at least one hardware chip.

The Wi-Fi module and Bluetooth module may perform the communication in a Wi-Fi manner and a Bluetooth manner, respectively. In case of using the Wi-Fi module or the Bluetooth module, the communication interface 160 may first transmit and receive various connection information such as a service set identifier (SSID) or a session key, and connect the communication based on this connection information, and then transmit and receive various information. The infrared communication module may perform the communication based on infrared data association (IrDA) technology that wirelessly transmits data in a short distance using an infrared ray between visible and millimeter waves.

In addition to the above-described communication manners, the wireless communication module may include at least one communication chip performing the communication based on various wireless communication standards such as Zigbee, third generation (3G), third generation partnership project (3GPP), long term evolution (LTE), LTE advanced (LTE-A), fourth generation (4G), and fifth generation (5G).

Alternatively, the communication interface 120 may include a wired communication interface such as a high definition multimedia interface (HDMI), DisplayPort, Thunderbolt, a universal serial bus (USB), a red-green-blue (RGB) port, a D-subminiature (D-SUB) port, or a digital visual interface (DVI) port.

In addition, the communication interface 120 may include at least one of wired communication modules performing the communication by using a local area network (LAN) module, an Ethernet module, a pair cable, a coaxial cable, or an optical fiber cable.

The processor 130 may control overall operations of the electronic apparatus 100. In detail, the processor 130 may be connected to each component of the electronic apparatus 100 and control the overall operations of the electronic apparatus 100. For example, the processor 130 may be connected to a component such as the memory 110, and control the operations of the electronic apparatus 100.

At least one processor 130 may include at least one of a central processing unit (CPU), a graphics processing unit (GPU), an accelerated processing unit (APU), a many integrated core (MIC), a neural processing unit (NPU), a hardware accelerator, or a machine learning accelerator. At least one processor 130 may control one or any combination of other components included in the electronic apparatus 100, and may perform operations related to communication or data processing. At least one processor 130 may execute at least one program or instruction stored in the memory 110. For example, at least one processor 130 may perform a method according to an embodiment of the present disclosure by executing at least one instruction stored in the memory 110.

When a method according to an embodiment of the present disclosure includes a plurality of operations, the plurality of operations may be performed by one processor, or may be performed by a plurality of processors. For example, when a first operation, a second operation, and a third operation are performed by the method according to an embodiment, the first operation, the second operation, and the third operation may all be performed by a first processor, or the first operation and the second operation may be performed by the first processor (e.g., a general-purpose processor) and the third operation may be performed by a second processor (e.g., an artificial intelligence-specific processor).

At least one processor 130 may be implemented as a single-core processor including a single core, or as at least one multicore processor including multiple cores (e.g., homogeneous multiple cores or heterogeneous multiple cores). When at least one processor 130 is implemented as the multicore processor, each of the multiple cores included in the multicore processor may include an internal memory of the processor, such as a cache memory or an on-chip memory, and a common cache shared by the multiple cores may be included in the multicore processor. In addition, each of the multiple cores (or some of the multiple cores) included in the multicore processor may independently read and perform a program instruction for implementing the method according to an embodiment of the present disclosure, or all (or some) of the multiple cores may be linked to read and perform the program instruction for implementing the method according to an embodiment of the present disclosure.

When the method according to an embodiment of the present disclosure includes a plurality of operations, the plurality of operations may be performed by the single core among the multiple cores included in the multicore processor, or may be performed by the multiple cores. For example, when the first operation, the second operation, and the third operation are performed using the method according to an embodiment, the first operation, the second operation, and the third operation may all be performed by a first core included in the multicore processor, or the first operation and the second operation may be performed by the first core included in the multicore processor and the third operation may be performed by a second core included in the multicore processor.

In the embodiments of the present disclosure, at least one processor 130 may indicate a system-on-a chip (SoC) integrating at least one processor and other electronic components, the single-core processor, the multicore processor, or a core included in the single-core processor or the multicore processor. Here, the core may be implemented as the CPU, the GPU, the APU, the MIC, the DSP, the NPU, the hardware accelerator, or the machine learning accelerator. However, an embodiment of the present disclosure is not limited thereto. For convenience of description, the operation of the electronic apparatus 100 is hereinafter described by the term "processor 130."

The processor 130 may obtain a plurality of user data and a plurality of verification random data by replicating user data and verification random data into the plurality of user data and the plurality of verification random data, respectively, when the user data is obtained, obtain a plurality of ciphertext sets by encrypting the plurality of user data and the plurality of verification random data under different secret keys, and control the communication interface 120 to transmit the plurality of ciphertext sets to the server 200.

For example, the processor 130 may replicate the user data and the verification random data into the plural sets and encrypt the data respectively by applying different secret keys. Accordingly, when performing homomorphic operation, it may be difficult for the server 200 to infer a specific slot or position. In particular, the processor 130 may use a plurality of keys, thereby preventing an attacker from comparing or restoring the same slot, reducing a possibility of data tampering, and ensuring secure result transmission.

The processor 130 may receive a homomorphic operation result from the server 200 through the communication interface 120, and identify validity of the homomorphic operation result by performing a decryption and verification procedure on the homomorphic operation result.

For example, the processor 130 may decrypt the homomorphic operation result received from the server 200 and further perform a validity-checking procedure. That is, the processor 130 may address a vulnerability of a conventional homomorphic encryption operation in which a result manipulated by the server 200 is returned. The processor 130 may determine whether the result is forged by coupling decryption and verification and provide a reliable computation service.

The processor 130 may identify the validity of the homomorphic operation result by identifying whether a result corresponding to the plurality of random data for verification in the homomorphic operation result matches a pre-stored value.

For example, the processor 130 may compare a match between a pre-stored value for random data and a result value as a specific method of the verification procedure. Accordingly, even when the server 200 manipulates the homomorphic operation result, the processor 130 may immediately detect a mismatch by using a verification slot. Here, the verification slot may serve as an integrity checkpoint and ensure validity of result data.

The processor 130 may identify the validity of the homomorphic operation result by identifying whether a plurality of results respectively corresponding to the plurality of user data in the homomorphic operation results match one another.

For example, the processor 130 may check whether results corresponding to the user data match each other. For example, when the attacker manipulates only a specific slot, a result mismatch may occur and thus be easily detected. That is, the processor 130 may enforce consistency between computation slots and enhance security by checking whether the same result is maintained for the plurality of data.

The processor 130 may invalidate the homomorphic operation result and provide an error state when an attack attempt is identified through the verification procedure.

For example, when an attack attempt is identified, the processor 130 may invalidate a corresponding result and return an error state. Accordingly, the user may be protected from trusting an incorrect operation result. This measure has a meaning beyond simply providing an error message and may block a possibility of illegal manipulation at a system level.

The processor 130 may rearrange the plurality of user data and the plurality of random data for verification according to a random permutation rule, and obtain a plurality of ciphertext sets by encrypting the plurality of rearranged user data and the plurality of rearranged random data for verification, respectively, under different secret keys.

For example, the processor 130 may increase unpredictability by rearranging the user data and the verification random data according to the random permutation rule. That is, the processor 130 may continuously change data locations and make it difficult for the attacker to identify a meaning of a slot. Subsequently, the processor 130 may perform double protection by applying different secret keys to respective data, and significantly increase an attack difficulty through such a combination.

The processor 130 may perform encryption and operation on each component in the plurality of ciphertext sets under different secret keys and evaluation keys corresponding to the secret keys.

For example, the processor 130 may process respective ciphertext components under different secret keys and evaluation keys to prevent mutual interference between a plurality of ciphertexts. Accordingly, the processor 130 may block an attack attempted based on a specific key. In addition, the processor 130 may check whether an operation by the server 200 is normally performed using the evaluation key. That is, the processor 130 may increase structural security by key diversification.

The processor 130 may update a plurality of ciphertext sets by inserting random padding or additional random number elements into the plurality of ciphertext sets and control the communication interface 120 to transmit the plurality of updated ciphertext sets to the server 200.

The processor 130 may provide additional concealment by using a technique of inserting random padding or random number elements into a plurality of ciphertext sets. That is, even when the same data is provided, the processor 130 may express the data as different ciphertexts each time and make tracking or analysis difficult, and thereby effectively defend against a statistical pattern analysis attack and increase safety of ciphertext sets during transmission to the server 200.

As described above, the electronic apparatus 100 may increase security performance by encrypting a plurality of user data and a plurality of verification random data under different secret keys and obtaining a plurality of ciphertext sets.

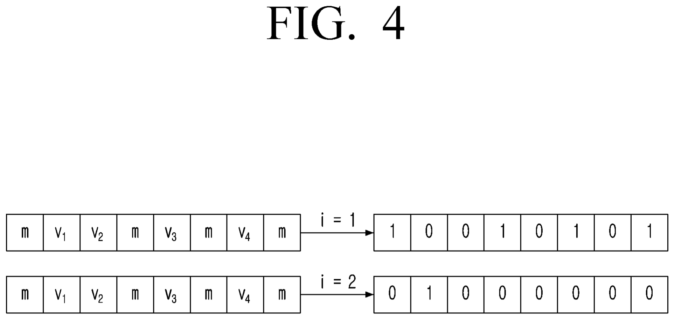

Hereinafter, operations of the electronic apparatus 100 are described in more detail with reference to FIGS. 4 to 11. FIGS. 4 to 11 illustrate individual embodiments illustrated for convenience of description. However, the individual embodiments illustrated in FIGS. 4 to 11 may be implemented in a combined state. In addition, operations in FIGS. 4 to 11 may correspond to operations of the processor 130, and notation of the processor 130 may be omitted for convenience of description.

Verifiable Homomorphic Encryption (VHE) refers to a cryptographic technology that couples Homomorphic Encryption (HE) and Verifiable Computation (VC) and ensures both privacy and integrity of data in a data outsourcing scenario.

Replication Encoding (REP) and Polynomial Encoding (PE) may refer to lightweight VHE schemes. Both schemes may enable a verification mechanism by inserting specific secret information into homomorphic evaluation. A similar approach may be used in developing a Verifiable Oblivious Pseudorandom Function (VOPRF).

The present disclosure presents an attack that extracts secret information by using characteristics of a homomorphic encryption scheme in an encrypted state and thus enables forgery of an evaluation result. An attack presented in the present disclosure on REP and PE may achieve a success probability of 1 in linear time complexity. In addition, the present disclosure presents an attack on REP that operates without homomorphic operation. This attack may achieve linear time complexity, and have a success probability inversely proportional to a given parameter. In case of VOPRF, for an 80-bit security parameter, an attack presented in the present disclosure may achieve a success probability of 26.3% in linear time complexity.

## 1 Introduction

Verifiable Computation (VC) refers to a technique that ensures correctness of an outsourced operation result of a client [15]. Accordingly, this technique may prevent a server from providing a malicious operation result. VC may enable the client to detect an incorrect operation performed by the server and suppress the server from performing a malicious operation.

Meanwhile, Homomorphic Encryption (HE) may enable an operation without decrypting ciphertext data. Supporting unlimited operation may be referred to as Fully Homomorphic Encryption (FHE), and otherwise referred to as Somewhat Homomorphic Encryption (SHE) or Leveled Homomorphic Encryption. This cryptographic technique may ensure privacy of client information while outsourcing complex operations to the server. The HE scheme may include a plurality of schemes including BFV [10], BGV [4], TFHE [8], and CKKS [7].

Comprehensively, in an outsourcing operation scenario, VC may ensure integrity of an operation result, and HE may ensure information privacy of the user. Coupling of these two technologies may be referred to as Verifiable Homomorphic Encryption (VHE).

One simple approach for obtaining may be using a succinct non-interactive argument of knowledge (SNARK) or the VC scheme to perform a homomorphic operation on data encrypted by HE [2]. However, this approach may provide a highly inefficient solution because HE uses various heavy operations such as bootstrapping (BTS), relinearization (Relin), and rotation (Rot), and is not easily integrated with existing VC schemes.

Meanwhile, other research fields aim to design an efficient scheme capable of achieving verifiability at a low cost by using confidentiality of homomorphic encryption. The present disclosure reviews various schemes [1, 5], shows that such attempts are still unsuccessful, and provides further improvements.

## 1.1 Lightweight Verifiable Homomorphic Encryptions

A new VHE solution, Verifiable Interactive Arguments (VERITAS), may support all operations in BFV and BGV. Compared with a basic HE scheme, VERITAS may introduce an overhead of $\times 1$ to $\times 75$ depending on characteristics of an operation circuit. VERITAS may use several random values and precomputed results thereof. For example, for a predefined circuit $f : \mathbb{Z}_t \rightarrow \mathbb{Z}_t$, when a message space is $\mathbb{Z}_t$, a client may have several random values $v_j$ and precomputed results $f(v_j)$. The client may encode a message m and the random values $v_j$ together by using specially designed encoders (Replication Encoding (REP) and Polynomial Encoding (PE)). When homomorphic operation is correctly performed, a decrypted result may include both values $f(v_j)$ and $f(m)$. To verify integrity of a result, the client may check whether the values $f(v_j)$ match previously known values and identify $f(m)$ as a valid result if the values match.

Replication Encoding. In REP, among slots indexed from 1 to n, the random values $v_j$ may be disposed in specific slots denoted as $S \subset \{1,...,n\}$, and verification slots may be denoted as $|S| = n/2$. Meanwhile, other slots denoted as $S^c = \{1,...,n\} - S$, that is, computation slots, may be repeatedly filled with the message m. For example, when n = 4 and S = {1, 4}, the client may generate a vector $(v_1,m,m,v_2)$. For example, when N refers to the number of slots and $n|N$, an encoding for

$$\mathbf{m} = (m_1, \ldots, m_{N/n}) \in \mathbb{Z}_t^{N/n}$$ may be established as follows when $x = N/2n$:

$$\left( v_1, m_1, m_1, v_2 \big| v_3, m_2, m_2, v_4 \big| \cdots \big| v_{x-1}, m_{\frac{N}{n}}, m_{\frac{N}{n}}, v_x \right)$$

For simplification, when $m \in \mathbb{Z}_t$ and an evaluation function f has one input and one output, and an operation is correctly performed, a result vector may correspond to $(f(v_1), f(m), f(m), f(v_2))$. The client may verify the result by checking whether all values in verification slots S match precomputed values $f(v_j)$ and whether values in the computation slots match each other. When both conditions are satisfied, the client may identify a computation result as $f(m)$.

Verifiable Oblivious PRF. In an embodiment, when a new candidate Oblivious Pseudorandom Function (OPRF) is applied by using HE, the function may be extended to a Verifiable Oblivious Pseudorandom Function (VOPRF). When two parties A and B jointly compute a PRF z = F(k, x)/PRF z = F(k, x), where k is a pseudorandom function (PRF) key secretly held by party A, and x and z are an input and an output secretly held by party B, HE may provide a solution to this problem. For example, the client B may encrypt x by using the HE scheme and transmit the ciphertext to the server A, the server may homomorphically evaluate PRF F(k, x) under its own secret key k and transmit a result to the client, and the client may decrypt a received ciphertext and obtain a result z.

To extend verifiability, a method having stricter constraints based on TFHE [8], similar to REP, may be used. First, the server may select several verification points $\mathbf{x}_k^*$ ($1 \le k \le \kappa$) and publish $\mathfrak{R} := \{(\mathbf{x}_k^*, \mathbf{z}_k^* = F(\mathbf{k}, \mathbf{x}_k^*)) | 1 \le k \le \kappa\}$ together with a zero-knowledge proof. When evaluating $\mathbf{x}_i (1 \le i \le \alpha)$, the client may generate a vector of length $\gamma = \alpha v + \beta$, in which a replicated copy $v$ of each $\mathbf{x}_i$ and $\beta$ $\mathbf{x}_k^*$ values are included. After outsourcing, the client may perform verification in a manner similar to a verification step in REP. Accordingly, HE may be used only for computing the predefined PRF circuit and remain in an SHE state.

Polynomial Encoding. In PE, the client may select $\alpha \in \mathbb{Z}_t^{\times}$, interpolate a message $\overline{\mathbf{m}} = (m_1, \ldots, m_N) \in \mathbb{Z}_t^N$ and a random vector $(v_1, \ldots, v_N) \in \mathbb{Z}_t^N$ at X = 0 and X = $\alpha$, respectively, and obtain the following linear polynomial $\mathbf{m} + \left(\frac{\mathbf{v} - \mathbf{m}}{\alpha}\right) X \in \mathbb{Z}_t^N[X]$. The message may then be encoded and encrypted by coefficients, and a ciphertext polynomial $\mathcal{R}_q^2[X]$ may be obtained. An operation may be performed on a polynomial X in $\mathcal{R}_q^2[X]$, and the operation on coefficients may correspond to homomorphic operation. When the operation is performed in a correct manner, a result polynomial

$$F(X) \in \mathcal{R}_q^2[X]$$

may satisfy Dec(F($\alpha$)) = f(**v**) and Dec(F(0)) = f(**m**). Accordingly, the client may verify whether Dec(F($\alpha$)) = f(**v**) is satisfied and obtain a constant term Dec(F(0)) as a desired result f(**m**) when verification is successful.

ReQuadratization. A computation cost in PE may exponentially increase according to multiplication depth. For example, squaring $ct_0 + ct_1 X$ may yield $ct_0' + ct_1' X + ct_2' X^2$, and squaring the result again may yield $ct_0'' + \cdots + ct_4'' X^4$. That is, as a degree of a polynomial may increase for each multiplication, computation complexity may sharply increase and result in significant performance degradation.

To solve such drawbacks, a client-aided protocol, ReQuadratization (ReQ), may be used. ReQ may reduce a computation cost by converting a fourth-order polynomial $Q_4(X) = ct_0 + \cdots + ct_4 X^4$ into a quadratic polynomial $Q_2(X) = ct_0' + ct_1' X + ct_2' X^2$ and ensuring that Dec($Q_4(0)$) = Dec($Q_2(0)$) and Dec($Q_4(\alpha)$) =

Dec($Q_2(\alpha)$) are satisfied. For example, the server may transmit $ct_3X^3 + ct_4X^4$ to the client, the client may decrypt this part and then generate another polynomial $\tilde{ct}_1X + \tilde{ct}_2X^2$ to satisfy Dec($ct_3\alpha^3 + ct_4\alpha^4$) = Dec($\tilde{ct}_1\alpha + \tilde{ct}_2\alpha^2$). The client may transmit this polynomial to the server, and the server may add the polynomial to a remaining part $ct_0 + ct_1X + ct_2X^2$ and obtain $Q_2(X)$ = ($ct_0 + ct_1X + ct_2X^2$)+ ($\tilde{ct}_1X + \tilde{ct}_2X^2$). Consequently, Dec($Q_4(0)$) = Dec($Q_2(0)$) and Dec($Q_4(\alpha)$) = Dec($Q_2(\alpha)$) may be satisfied.

## 1.2 Attacks on Replication Encodings

Both REP and PE may include serious vulnerabilities. By using homomorphic operation, the server may forge a ciphertext with only encrypted information without knowing S or $\alpha$.

Attack on REP. In the attack on REP, a core step may correspond to identifying computation slots in an encrypted state. A homomorphic circuit may be designed to identify such slots. Let $J_S := (j_1,...j_n)$, where $j_i = 0$ for $i \in S$ and $j_i = 1$ otherwise. In addition, Enc($J_S$) may be assumed as an encryption of a location vector $J_S$. For example, when n = 4 and S = $\{1, 4\} \subset \{1, 2, 3, 4\}$, Enc($J_S$) may denote an encryption of (0, 1, 1, 0), and similarly, Enc($J_{Sc}$) may denote an encryption of (1, 0, 0, 1).

The attacker may evaluate a cheating circuit that extracts a common value among n slots. For example, a circuit $(\upsilon_1, m, m, \upsilon_2) \to (0, 1, 1, 0)$ may enable the attacker to obtain Enc($J_S$) homomorphically. A simple circuit that extracts Enc($J_S$) from a new ciphertext may be designed and use $|S| + 1$ comparisons on $\mathbb{Z}_t$. This circuit may be evaluated with a time complexity of $O(|S|\log t)$ in a BFV scheme.

After Enc($J_S$) is restored, the attacker may forge the ciphertext as follows:

$$\mathrm{Eval}_f(\mathsf{ct}) \cdot \mathrm{Enc}(J_{S^c}) + \mathrm{Eval}_g(\mathsf{ct}) \cdot \mathrm{Enc}(J_S)$$

This value may be decrypted as a verification value $f(\upsilon_i)$ by using the verification slots S and as a malicious result g(m) by using computation slots $S^c$, and g may be a malicious circuit executed by the attacker.

Attacks against Replication Encoding with Different keys. The above attack on REP may use homomorphic comparison to identify replicated values. To block such an attack, the HE scheme may use a separate encryption key for each slot, thereby preventing comparison between different slots. When an encoding of m corresponds to ($\upsilon_1, m, m, \upsilon_2$), each value may be encrypted under a separate key such as $Enc_{pk1}(\upsilon_1)$, $Enc_{pk2}(m)$, $Enc_{pk3}(m)$, $Enc_{pk4}(\upsilon_2)$. In this case, comparison between different ciphertexts may be blocked.

However, this variation may also be vulnerable to a new attack. This attack may be applied to any variant of REP under FHE. Instead of homomorphic comparison between slots, this attack may evaluate a characteristic function $\chi_A$ for each slot. When a slot value belongs to a set A, a value 1 may be stored, and otherwise, a value 0 may be stored. For example, when $\nu$ is a set including m and all verification values, in an above example, $\nu = \{m,\upsilon_1,\upsilon_2\}$ and $|\nu| = 3$. The attack may be successful when $A \cap \nu = \{m\}$.

In an embodiment, when A is an arbitrary subset of $\mathbb{Z}_t$, an attack success probability may be determined only by the size of A. One of the key results is that when the size of A is

$$|A| = \lfloor t/|\mathcal{V}|\rfloor$$

, and $t = |\mathbb{Z}_t|$ is a size of a message space, the attack success probability may be approximated as $(e|\nu|)^{-1}$. An attack probability may not be ignored when computation overhead increases compared with an original BFV scheme.

It may be difficult to evaluate an arbitrary characteristic function over the entire message space $\mathbb{Z}_t$. However, it may be sufficient to use a heuristically random-like A rather than a truly random A. A pseudo-Legendre symbol function $L_a$ may be defined as $O(\log t)$ and may be computed by performing homomorphic multiplication. When x-a is a quadratic residue, $L_a(x)$ may output a value 1, and output a value 0 otherwise. A quadratic residue distribution may be exhibit randomness in $\mathbb{Z}_t^\times$, and this function may implement a lightweight random characteristic function.

Attacks against Replication Encoding under SHE. In Fully Homomorphic Encryption (FHE), an attack may be attempted by configuring cheating circuits using unlimited operation. However, in Somewhat Homomorphic Encryption (SHE), configuring such cheating circuits may be more difficult. In an embodiment, only one Torus Fully Homomorphic Encryption (TFHE) bootstrapping may be allowed simultaneously for replicating input values to verification values [3]. This constraint may reduce a possibility of an attack through a homomorphic cheating circuit.

However, an attack may also be attempted by using only homomorphic addition. The server may receive a ciphertext string vector $(ct_i)_{1 \leq i \leq \gamma}$, where each $ct_i$ may include n ciphertexts and $ct_i = (ct_{i,j})_{1 \leq j \leq n}$. The attacker may select $u \leftarrow \{1, ..., n\}$ and select $ct_{i,u}$ for each ciphertext string. Each $ct_{i,u}$ may correspond to a ciphertext of 0 with approximately 50% probability or may correspond to a ciphertext of 1 otherwise. For each i, the attacker may add $ct_{i,u}$ to every $ct_{i,j}$, and when all $ct_{i,u}$ correspond to the ciphertexts of 0 for i corresponding to checkpoint positions, $\beta$ checkpoints may remain unchanged. The probability of this event may be approximately $2^{-\beta}$, and an attack success probability may not significantly change with an increase in a parameter $\nu$ or a decrease in $\alpha$. To achieve $\lambda$-bit security, $\beta$ may be required to be greater than $\lambda$.

Introduction of bootstrapping may enable execution of a more efficient attack. When the attacker selects $u1, u2 \leftarrow \{1, ..., n\}$ and sets $u = (u1, u2)$, the attacker may obtain $ct_{i,u}$ by evaluating an AND-gate bootstrapping on $ct_{i,u_1}$ and $ct_{i,u_2}$. This value may correspond to a ciphertext of 0 with a probability of approximately 3/4. This value may be obtained through bootstrapping and may thus be added to a PRF output as $Eval_F(ct_i)+(ct_{i,u},...,ct_{i,u})$. Similar to the above case, for i where $ct_{i,u}$ corresponds to the ciphertext of 0, the $\beta$ checkpoints may remain unchanged. This event may occur with a probability of approximately $\left(\frac{3}{4}\right)^{\beta} \approx (1/2)^{0.41\beta}$. To achieve the $\lambda$-bit security, $\beta$ may be required to be greater than $2.4\lambda$.

In addition, when three inputs are used for one bootstrapping, a result may be manipulated with a probability of approximately $\left(\frac{7}{8}\right)^{\beta} \approx (1/2)^{0.19\beta}$. In an embodiment, a dishonest circuit of depth 2 may require three inputs for one bootstrapping by using a controlled multiplexer (CMUX) gate and may provide 80-bit security authentication by using parameters $(\alpha, \beta, \nu) = (105, 10, 11)$. When three inputs are allowed, the attacker may manipulate a result with a probability of approximately $(1/2)^{0.19\beta} = (1/2)^{1.9} \approx 26.3\%$.

1.3 Attacks on Polynomial Encodings

Hereinafter, an attack on PE is presented. Let f be an honest circuit with an output $F(X) \in \mathcal{R}_q^2[X]$ requested by a client, and let g be a malicious circuit with an output $G(\bar{X}) \in \mathcal{R}_q^2[X]$. H(X) may be defined as follows:

$$H(X) = X^{\phi(t)} \cdot F(X) + \left(1 - X^{\phi(t)}\right) \cdot G(X)$$

Then, $Dec(H(\alpha)) = Dec(F(\alpha)) = f(v)$ and $Dec(H(0)) = Dec(G(0)) = g(m)$, and H(X) may pass the client verification.

However, the forged result H(X) may be directly detected because a degree of H is higher, that is, $(\deg H \geq \varphi(t))$, whereas a degree of an honest output F(X) is lower. ReQ may be required to be used to reduce the degree of H(X) while maintaining identical decryption values of $Dec(H(\alpha))$ and $Dec(H(0))$. This ReQ operation may convert a sum of fourth- and third-order terms $ct_4 X^4 + ct_3 X^3$ into a sum of second- and first-order terms $\tilde{ct}_2 X^2 + \tilde{ct}_1 X$. This conversion may provide $R(X) = ct_4 X^4 + ct_3 X^3 - \tilde{ct}_2 X^2 - \tilde{ct}_1 X$ as a relationship between $\alpha$ and 0 in an encrypted state. In an embodiment, information on $\alpha$ may be exposed to the server as a root 0 of a cubic equation of R(X)/X.

$\tilde{H}(X) = H(X) \pmod{R(X)}$ may satisfy $Dec(\tilde{H}(\alpha)) = f(\mathbf{v})$ and $Dec(\tilde{H}(0)) = g(\mathbf{m})$. To ensure that Euclidean division on $\mathcal{R}_q^2[X]$ is well-defined, R(X) may be required to be assumed as an encryption of a monomial polynomial on $\mathbb{Z}_t^N$, and decryption of $ct_4$ may include only a unit element in that slot. In a ReQ protocol, a leading term $ct_4$ may be transmitted from the server to the client, and the attacker may dispose a value 1 (or generally the unit element) in at least one slot of $ct_4$ slots and then request ReQ to construct R(X). This attacker-side procedure may ensure that a corresponding slot includes a monomial fourth-order equation on $\mathbb{Z}_t$. The attacker may replicate that slot to all remaining slots and convert R(X) into an encryption of a monomial polynomial on $\mathbb{Z}_t$. Therefore, without loss of generality, a relationship between R(X) and X may be redefined as follows:

$$\mathrm{R}(X) = \mathrm{ct}^{(1)}X^4 + \mathrm{ct}_3 X^3 + \mathrm{ct}_2 X^2 + \mathrm{ct}_1 X$$

Here, ct$^{(1)}$ may correspond to an encryption of a vector (1, ..., 1).

Euclidean division by R(X) may be defined on $\mathcal{R}_q^2[X]$, and consequently $\{\mathrm{F}(X) \in \mathcal{R}_q^2[X] \mid \deg \mathrm{F} < \deg \mathrm{R} = 4\}$ may be obtained as good representatives of $\mathcal{R}_q^2[X]/(\mathrm{R}(X))$. The attacker may compute $X^{\phi(t)} \in \mathcal{R}_q^2[X]/(\mathrm{R}(X))$, and a computation cost may be $O(\log(t))$. That is, the attacker may compute $\tilde{\mathrm{H}}(X) = \mathrm{H}(X) \pmod{\mathrm{R}(X)} \in \mathcal{R}_q^2[X]/(\mathrm{R}(X))$, which may satisfy deg $\tilde{\mathrm{H}} < 4$ and pass a verification.

An attack on REP may correspond to a probability-1 attack and have a time complexity of $O(n\log t)$ Another attack on REP, which does not use an operation between slots, may be presented. This attack may have a time complexity of $O(\log n\log t)$ and a probability of $(e|v|)^{-1}$. An attack on VOPRF may require $O(\gamma)$ homomorphic additions and have a probability of approximately $\left(\frac{1}{2}\right)^{\frac{1}{2^k \ln 2}\beta}$, where k refers to the number of ciphertexts used as input in one programmable bootstrapping. The attack on PE may correspond to the probability-1 attack and have a time complexity of $O(\deg \mathrm{R}^2 \log t)$.

1.4 Our Contributions

The present disclosure includes several new attacks on a lightweight verifiable homomorphic encryption scheme.

The present disclosure presents the attack on REP with probability 1 and a time complexity may be $O(n\log t)$. In addition, the present disclosure presents another attack on REP that does not require an operation between slots. This attack may have the time complexity of $O(\log n\log t)$ and a success probability of approximately $(e|v|)^{-1}$. This attack may use a replication-based approach and show that a verifiable FHE scheme does not provide security against a malicious attacker.

In addition, an attack may be attempted on the VOPRF scheme to obtain a result having a success probability of approximately $\left(\frac{1}{2}\right)^{\frac{1}{2^k \ln 2}\beta}$ by using O(t) homomorphic additions and bootstrapping. Here, k refers to the number of ciphertexts used as input in one programmable bootstrapping. The number of bootstrappings may be set as a restriction on security, yet feasibility of this attack may remain. An assumption of this scheme may rely on intuitive security, which may make it difficult for the attacker to construct a shallow circuit.

In addition, the present disclosure presents an attack on PE with probability 1 by using algebraic characteristics of $\mathcal{R}_q^2[X]/(\mathrm{R}(X))$, and a time complexity may be $O(\deg \mathrm{R}^2 \log t)$.

1.5 Related Works

In designing VHE, it may be difficult to handle heavy computation overhead of HE. The present disclosure may focus on VHE research and achieve this advancement at a low computation cost.

Veritas [5] includes a method of performing encoding under a verification key in a plaintext space and introduces REP and PE to perform Verifiable Homomorphic Encryption (VHE). Verification information may be encoded in the plaintext, and the server may perform only homomorphic operation, yet this approach may be unsafe.

In VOPRF, SHE may be used to prevent dishonest behavior by using the homomorphic circuit. An empirical assumption in this case is that it is difficult to construct a deep circuit at a shallow depth [6]. A PRF may be generated using bootstrapping at depth 1, and security may be reduced to an empirical assumption based on homomorphic properties.

2 Preliminary

2.1 Verifiable Computation

The present disclosure follows a definition of Verifiable Computation (VC) in [15], and Verifiable Computation is described as follows.

Definition 1 (Verifiable Computation). Verifiable Computation may correspond to a scheme $\Pi$ = (*KeyGen, ProbGen, Compute, Verify*) that satisfies the following:

- (sk, pk) ← KeyGen (F, $\lambda$): A key generation algorithm may receive a security parameter $\lambda$ and a target function F as inputs, and generate a public key pk and a secret key sk. The public key may be transmitted to a worker after encrypting the function F.
- $(\sigma_x, \tau_x)$ ← ProbGen$_{sk(x)}$ : A problem generation algorithm may receive the secret key sk and a function input x, and encode the function input x into two values $\sigma_x$ and $\tau_x$. The output value $\sigma_x$ may be provided to the worker, and the value $\tau_x$ may be privately maintained by the client.
- $\sigma_y$ ← Compute$_{pk(\sigma x)}$: A computation algorithm may be executed by the worker, may receive the input $\sigma_x$, and use the public key pk of the client, thereby outputting $\sigma_y$.
- *y or* $\perp$ ← Verify$_{sk}(\tau_x, \sigma_y)$: A verification algorithm may receive sk, $\tau_x$, and $\sigma_y$ as inputs, convert $\sigma_y$ into an actual output of the function F. The algorithm may test validity, and output $\perp$ when invalid.

Definition 2 (Correctness). When a scheme $\Pi$ corresponds to a Verifiable Computation scheme (KeyGen, ProbGen, Compute, Verify), and when the keys pk and sk are maintained as KeyGen(F, $\lambda$), and an input value x $\in$ Dom (F) is maintained as above, the Verifiable Computation scheme $\Pi$ may be correct when the following is satisfied:

$$\Pr\left[ y = F(x) : \begin{array}{l} (\sigma_x, \tau_x) \leftarrow \mathrm{ProbGen}_{\mathrm{sk}(x)} \\ \sigma_y \leftarrow \mathrm{Compute}_{\mathrm{pk}(\sigma_x)} \\ y \leftarrow \mathrm{Verify}_{\mathrm{sk}}(\tau_x, \sigma_y) \end{array} \right] \leq negl(\lambda)$$

Here, negl($\lambda$) may correspond to a negligible function in the parameter $\lambda$.

In Verifiable Computation, the security parameter $\lambda$ may perform the following function: When the attacker attempts a malicious computation, the client may detect this attach with a probability of 1 - $2^{-\lambda}$. Verifiable Computation achieving this level of security may provide $\lambda$-bit security, and in an embodiment, $\lambda \geq 32$ may be set in a malicious yet rational attacker model [18].

Definition 3 (Security). Through an attack on the Verifiable Computation scheme, the present disclosure presents a forgery attack by a probabilistic polynomial-time attacker A.

The same quantifiers may be used as described in Definition 2, and an advantage of A over the Verifiable Computation scheme $\Pi$ defined above may be defined as follows:

$$Adv_{\mathcal{A}}(\Pi, F, \lambda) = \Pr\left[ \hat{y} \neq \perp \ and \ \hat{y} \neq F(x) : \begin{array}{l} \sigma_{\hat{y}} \leftarrow \mathcal{A}(\mathrm{pk}, x, \sigma_x) \\ \hat{y} \leftarrow \mathrm{Verify}_{\mathrm{sk}}(\tau_x, \sigma_{\hat{y}}) \end{array} \right]$$

The Verifiable Computation scheme $\Pi$ may be secure when the advantage satisfies the following:
$Adv_A(\Pi, F, \lambda) \leq negl(\lambda)$

Here, negl($\lambda$) may be a negligible function in the parameter $\lambda$.

2.2 Homomorphic Encryption

Homomorphic Encryption may correspond to a tuple of algorithms that allow computation on encrypted data.

Definition 4 (Homomorphic Encryption). Homomorphic Encryption may correspond to a scheme $\Pi$ = (KeyGen, Enc, Dec, Eval) that satisfies the following:

- (*sk, pk, evk*) ← KeyGen($1^\lambda$): For the given security parameter $\lambda$, KeyGen may generate the encryption key pk, the secret key sk, and some evaluation keys *evk* = {evk$_j$}.
- *ct* ← Enc$_{pk}$(*m*): For the message m, the encryption key pk may be used to output the ciphertext ct.
- *m* ← Dec$_{sk}$(*ct*): For the ciphertext ct, the secret key sk may be used to output the message m.
- *ct* ← Eval$_f$(*ct$_1$*,...,*ct$_k$*; evk): For a homomorphic circuit f, for inputs *ct$_i$* = Enc$_{pk}$(*m$_i$*) (1 ≤ i ≤ k), an evaluation key evk may be used to output the ciphertext ct, which is an encryption of $m = f(m_1,...,m_k)$.

Bootstrapping. In many HE systems, an error may accumulate at each operation. Bootstrapping may correspond to a technique that removes such an error and refreshes a ciphertext. When computation is performed without limitation, a scheme may be referred to as Fully Homomorphic Encryption (FHE), and otherwise may be known as Somewhat Homomorphic Encryption (SHE). In many cases, bootstrapping may convert SHE into FHE. However, in a constrained setting, bootstrapping may generate ciphertexts encrypted under different keys, which may limit an additional operation.

BFV. BFV may correspond to a Ring Learning With Errors (RLWE)-based HE scheme that supports computation over integers [10], where VERITAS may be instantiated. A message space may be denoted as $\mathbb{Z}_t^N$, where $t = p^r$ is a power of a prime p. The plaintext space may be denoted as $\mathcal{R}_t = \mathbb{Z}_t[X]/(\Phi_M(X))$, where $\Phi_M(X)$ corresponds to an M-th cyclotomic polynomial and has a degree of $N = \varphi(M)$. A ciphertext space may be q > t for $\mathcal{C} = \mathcal{R}_q^2$. This scheme may support rotations, $\sigma_i : \mathbb{Z}_t^N \rightarrow \mathbb{Z}_t^N$, that is, shift operations on $\mathbb{Z}_t^N$.

TFHE. TFHE may refer to a Tensor Learning With Errors (TLWE)-based HE scheme specialized for evaluation of Boolean circuits [8], where VOPRF [1] may be instantiated. The plaintext space may be denoted as $\mathbb{Z}_Q$, and a message space may be encoded using $\mathbb{Z}_P$, and P < Q. The plaintext may then be encrypted into a ciphertext space $\mathcal{C} = \mathbb{Z}_Q^{n+1}$, where n is determined by a security parameter.

Programmable Bootstrapping. In TFHE, bootstrapping may have additional functions beyond error refreshing. By using a look-up table (LUT), the error may be reduced during a bootstrapping process. This LUT-implemented bootstrapping technique may be referred to as Programmable Bootstrapping (PBS) [17], and PBS may enable homomorphic evaluation of nonlinear functions.

3 Attacks on Replication Encoding

The present disclosure considers Replication Encoding (REP) and its verification procedure described in [5], which is based on BFV. For convenience of description, the present disclosure assumes evaluation of a polynomial $f : \mathbb{Z}_t \rightarrow \mathbb{Z}_t$ on a ciphertext encrypted by a homomorphic encryption scheme $\mathsf{Enc} : \mathbb{Z}_t^N \rightarrow \mathcal{R}_t^2$ and describes an attack. Here, $t = p^r$ may be a power of a prime. However, extending this equation to a multivariate polynomial circuit over $f : \mathbb{Z}_t^\mu \rightarrow \mathbb{Z}_t^\nu$ is straightforward, where $\mu, \nu \in \mathbb{Z}^+$, and an element of $\mathbb{Z}_t^\mu$ may be regarded as an (extended) slot element.

3.1 Replication Encoding

When f is assumed as a circuit that the client requests to evaluate, Replication Encoding (REP) may proceed as follows.

- The client may select a subset of $S \subset \{1, \ldots, n\}$ having a size of $|S| = n/2$ at random for a positive integer n.
- Slots indexed by $i \in S^c$ may be filled with an identical message m, and complementary slots indexed by $i \in S$ may be filled with n/2 pseudorandom values $v_i \xleftarrow{\$} \mathbb{Z}_t$.

The present disclosure refers to slots indexed by S as verification slots and slots indexed by $S^c$ as operation slots (computation slots), and the server may evaluate the circuit f independently on the slots. After evaluation of the circuit f on the ciphertext, a decryption result may include $f(v_i)$ in the verification slots and $f(m)$ in the operation slots.

For verification, assuming that the client already knows $f(v_i)$ and its correctness in advance, by using an existing verifiable operation (computation) technique, outsourcing computation of $f(v_i)$ to a third party, or safely computing the same for itself, the client may verify as follows.

- The client may decrypt the ciphertext to obtain a vector $(z_i)$ for i=1,...,n.
- For the verification slots $i \in S$, the client may verify whether $z_i = f(v_i)$.

- For the computation slots $i \in S^c$, the client may verify whether $z_i$ are identical.

When these conditions are satisfied, a common value in the computation slots may be approved as f(m).

A main security assumption may lie in hardness of guessing a random subset $S \subset \{1,...,n\}$. The number of possible guesses of S may be S is $\binom{n}{n/2} \cong \sqrt{\frac{2}{\pi n}} 2^n$. When n is set as $\lambda$, this expression may be used to guarantee approximately $\lambda$-bit security.

3.2 Attack against REP

Learning or guessing $S \subset \{1,...,n\}$ may be difficult. Instead, an approach according to the present disclosure may correspond to learning S in an encrypted state. That is, the approach may correspond to computing $Enc(J_S)$ for $J_S := (j_1,...,j_n)$, in which $j_i = 0$ (if $i \in S$) and $j_i = 1$ (otherwise).

When recovering $Enc(J_S)$, the attacker may easily forge a ciphertext by computing the following:

$ct_{forged} := Mult(Enc(J_S), Eval_{g(ct)}) + Mult(Enc(JS), Eval_{f(ct)})$

Here, f may correspond to a circuit that the client requests to evaluate, and g may correspond to a modified circuit by the attacker. $ct_{forged}$ may include $f(v_i)$ in the verification slots and $g(m)$ in the computation slots. Therefore, $ct_{forged}$ may pass a verification step yet provide a malicious result to the client.

To allow the attacker to recover $Enc(J_S)$, the present disclosure designs an algorithm [1] that extracts a position vector of a common value at a complexity of $O(\log t)$. For example, when an i-th slot among n slots is selected and referred to as a reference slot, an output of the algorithm may correspond to a position vector of a slot identical to this reference value, as illustrated in FIG. 4.

The present disclosure may define two functions Duplicate$_i$ and Compare as follows:

- Duplicate$_i$ : $\mathbb{Z}_t^n \to \mathbb{Z}_t^n$ may correspond to a function mapping $(x_1,...,x_i,...,x_n) \mapsto (x_i,...,x_i)$.

- Compare: $\mathbb{Z}_t^2 \to \mathbb{Z}_t$ may correspond to a function returning 1 when x=y and returning 0 otherwise.

Eval$_{Compare}$ in BFV may be computed using $\lceil \log t \rceil$ homomorphic multiplications, by using Fermat's little theorem when a plaintext modulus t is a prime. However, when t is a power of a prime, some modification may be required.

For an integer r>1, assuming $t = p^r$, consider $e(x) = 1 - x^{\phi(t)}$. Here, $\phi$ may indicate Euler's totient function, and e(x) =0 when $x \in \mathbb{Z}_t^{\times}$ and e(x)=1 otherwise.

A polynomial $\alpha$ that outputs 0 for all x=0 may be defined as follows:

$$\alpha(x) = e(x) \cdot \prod_{u \in \mathbb{Z}_t^{\times} \setminus \{1\}} (x + 1 - u)$$

Lemma 1.

$$\alpha(x) = \begin{cases} \phi(t) & if \ x = 0 \\ 0 & if \ x \neq 0 \end{cases}$$

Proof. First, when $-e(x) = x^{\phi(t)} - 1 = \prod_{u \in \mathbb{Z}_t^{\times}} (x - u)$, the following may be satisfied.

$$\prod_{u \in \mathbb{Z}_t^\times \setminus \{1\}} (x + 1 - u) = \sum_{i=0}^{\phi(t)-1} (x + 1)^i$$

If x=0, $\alpha(0) = e(0) \cdot \phi(t) = \phi(t)$. Alternatively, when x is a unit, $\alpha(x)$ is a multiple of e(x)=0 and thus $\alpha(x) = 0$. Alternatively, when x is nonzero and not a unit, $x + 1 \neq 1$ is a unit, because otherwise both x and x+1 become multiples of p. Then the following may be satisfied.

$$\alpha(x) = e(x) \left( \prod_{u \in \mathbb{Z}_t^\times \setminus \{1\}} (x + 1 - u) \right)$$

$$= e(x) \cdot 0 = 0$$

Therefore, for $x, y \in \mathbb{Z}_t$, an interpolation of $\alpha(x - y)$ into $\phi(t) \mapsto 1$ and $0 \mapsto 0$ may obtain a Compare (x, y) function.

The present disclosure assumes that in BFV, $\text{Eval}_{\text{Compare}}$ may be executed using $O(\log t)$ homomorphic multiplications asymptotically.

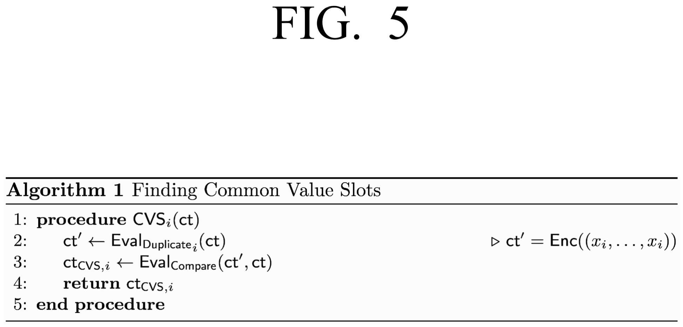

Lemma 2. When $i \xleftarrow{\$} \{1, \dots, n\}$, $\text{CVS}_i(ct)$ in Algorithm 1 of FIG. 5 may output $Enc(J_S)$ with probability 1/2 by $O(\log t)$ homomorphic multiplications and rotations.

Proof. First, correctness in Algorithm 1, which is expected to output $Enc(J_S)$, is described below. The server may select i at random from {1, ..., n}, and the present disclosure may thus assume that i belongs to set $S^c$ with probability 1/2. In this case, ct' is a ciphertext of (m, ..., m), and $\text{Eval}_{\text{Compare}}$(ct', ct) may return $Enc(J_S)$.

$\text{Eval}_{\text{Duplicate}_i}$ may require an operation of masking the i-th basis vector and a partial rotation sum in each of n message slots, which may require $\lceil \log n \rceil$ homomorphic rotations. As described above, $\text{Eval}_{\text{Compare}}$ may require $O(\log t)$ homomorphic multiplications and thus $n \leq \phi(t)$. Therefore, an overall complexity may correspond to $O(\log t)$ homomorphic multiplications/rotations.

The above Algorithm $\text{CVS}_i$(ct) may recover with probability 1/2. Hereinafter, a method for increasing an attack success probability by repeating the algorithm for several different i is described.

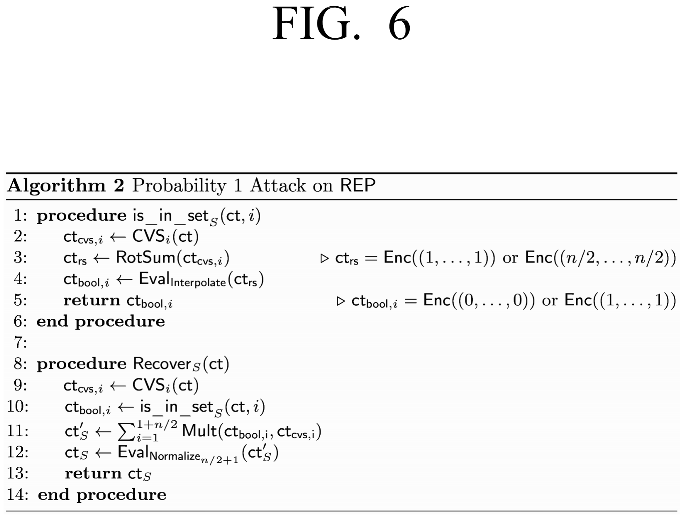

For a fixed i, summing all values in n slots of $ct_{\text{cvs},i}$ may output |S| or 0 depending on whether iES. This result indicates that the server may distinguish whether $i \in S$ in a homomorphic manner. By using this method, the attacker may construct a cheating circuit that outputs $Enc(J_S)$ when at least one of the reference indices i belongs to S. Therefore, referring to Algorithm 2 in FIG. 6, a recovery probability of S may reach 1 when the number of reference indices is greater than |S|.

The present disclosure may define three functions: RotSum, Interpolate, and $\text{Normalize}_k$, as follows.

$$\text{RotSum} : (x_1, \dots, x_n) \mapsto \left( \sum_{i=1}^{n} x_i, \dots, \sum_{i=1}^{n} x_i \right)$$

$$\text{Interpolate} : \begin{cases} 1 \mapsto 0 \\ n/2 \mapsto 1 \\ \text{otherwise anywhere} \end{cases}$$

$$\text{Normalize}_k : \begin{cases} 0 \mapsto 0 \\ 1,\ldots,k \mapsto 1, \\ \text{otherwise anywhere} \end{cases}$$

$\text{Eval}_{\text{RotSum}}$ may be evaluated in $\lceil \log n \rceil$ homomorphic rotations, and $\text{Eval}_{\text{Interpolate}}$ and $\text{Eval}_{\text{Normalize}_k}$ may be evaluated in $O(1)$ and $O(\log k)$ homomorphic multiplications, respectively.

Theorem 1. $\text{Recover}_S(\text{ct})$ presented in Algorithm 2 may output $\text{Enc}(J_S)$ at a computation cost of $O(n\log t)$.

Proof. Slots in $\text{ct}_{\text{cvs},i}$ may have n/2 ones when $i \in S^c$ or have one 1 when $i \in S$, and an image under $\text{Eval}_{\text{RotSum}}$ may thus correspond to $\text{Enc}(n/2, ..., n/2)$ or $\text{Enc}(1, ..., 1)$. Consequently, an interpolation of these slots may output $\text{ct}_{\text{bool},i}$ whose decryption is a vector of Boolean values $(1, ..., 1)$ or $(0, ..., 0)$.

Therefore, a decryption value identical to $|S^c \cap \{1,...,n/2 + 1\}| \cdot \text{Enc}(J_S)$ may be obtained by performing homomorphic multiplication by $\text{ct}_{\text{bool},i}$ and then summing $\text{ct}_{\text{cvs},i}$. After evaluating $\text{Normalize}_{n/2+1}$, the present disclosure may obtain $Enc(J_S)$.

$\text{Recover}_S(\text{ct})$ may invoke $\text{CVS}_i$ for i=1,...,n/2+1. This process may incur a cost of $O(n\log t)$ in homomorphic multiplications/rotations. A cost of the remaining operations may not be greater than $O(n\log t)$.

Consequently, a complete single attack may be attempted on original REP [5]. This attack may use a homomorphic rotation by 1. One may question a case where the client prevents such an attack by allowing the server to rotate only by n, yet bootstrapping is essential in FHE and rotation by 1 is essential in bootstrapping.

3.3 Attacks against Replication Encoding with Different Secret Keys

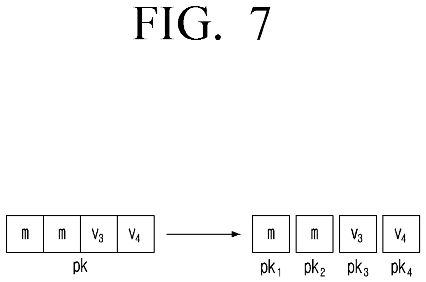

An attack described in [2] may compare values in slots by evaluating homomorphic rotations and recover $\text{Enc}(J_S)$. Therefore, restricting such a function may correspond to a countermeasure against this attack. Another possibility may correspond to replicating a message as n separate ciphertexts encrypted under different keys. This configuration may prevent interoperability among ciphertexts and make it difficult for the attacker to determine to which slot the message belongs in the homomorphic manner. First, a random subset $S \subseteq \{1,...,n\}$ having a size of $|S| = n/2$, a message $m \in \mathbb{Z}_t$, and a verification value $v_i \leftarrow \mathbb{Z}_t$ for $i \in S$ may be prepared. Next, BFV.KeyGen may be executed n times and n different keys $\{\text{pk}_i, \text{sk}_i, \text{evk}_i\}$ for $i \in \{1,...,n\}$ may be generated. Instead of encrypting the message by using a vector, each element may be encrypted separately. That is, $\text{ct}_i = \text{Enc}_{\text{pk}_i}(m)$ for $i \in S$ and $\text{ct}_i = \text{Enc}_{\text{pk}_i}(v_i)$ for $i \notin S$. The server may perform operations on these ciphertexts by using corresponding $\text{evk}_i$'s. As illustrated in FIG. 7, this patch may prevent an attack in Algorithm 2 by limiting homomorphic comparisons while simultaneously achieving the same effect as original REP.

Extended Attack. Restricting homomorphic comparisons between slots may not guarantee security of REP. In addition, another attack that does not rely on homomorphic rotations or comparisons may be attempted.

A core idea of this extended attack may correspond to homomorphically implementing a characteristic function $XA$ having a random subset A. First, the attacker may select and fix a random subset $A \subset \mathbb{Z}_t$ that is expected to include the message m. Next, the attacker may homomorphically evaluate $XA$ for each ciphertext. After evaluating $XA$, the attacker may forge values belonging to A. This procedure does not require an operation between slots. A is selected at random, and an attack success probability may depend only on a size of A.

Regarding the attack success probability, define $V$ as $\{m, v_j : j \in$, define p as a probability that each element m or $v_j \in V$ belongs to the random subset A, set q=1-p, and define $\mu := |V| = |S| + 1$. At least $\mu$ elements may be required to be evaluated together to evaluate a single message m. A heuristic may assume that the number is greater than $\mu$.

Theorem 2. When a random characteristic function $XA$ having a size of

$$|A| = \left\lfloor \frac{t}{\mu} \right\rfloor$$

is homomorphically evaluated, replication encoding may break at least with a probability of $(e\mu)^{-1}$.

Proof. For the random subset A, three cases are possible.

- Case (1): A has no value. A probability may be $q^\mu$.
- Case (2): A has some verification values. A probability may be $1-q^{\mu-1}$.
- Case (3): A has the message value m yet no verification value. A probability may be $q^{\mu-1} - q^\mu$.

Case (3) may refer to a case where the attack is successful. By setting $r = \mu^{-1}$ and substituting 1-r for q, $q^{\mu-1} - q^\mu$ may correspond to $Q(r) := (1 - r)^{(1/r)-1} - (1 - r)^{1/r}$, $Q(r)$ may be convex on [0, 1] and may have its slope $e^{-1}$ at r=0 is, and $Q(r) > e^{-1}r = (e\mu)^{-1}$.

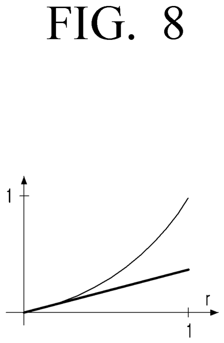

A graph of Q(r) is illustrated in FIG. 8, and when the server selects a random subset A having a size of an advantage of the attacker may be maximized with at least probability of at least $(e\mu)^{-1}$.

Heuristic Random Characteristic Function on BFV. An attack cost in Theorem 2 may correspond to an evaluation cost of *XA*. However, it may be unclear whether the attacker efficiently computes homomorphic operations on *XA* for a specific subset A. Instead of evaluating the random characteristic function *XA*, the present disclosure may construct a characteristic function supported by a heuristic random-like subset that behaves almost randomly.

When p is an odd prime, a pseudo-Legendre symbol function may be defined as follows.

Definition 5 (Pseudo Legendre Symbol). For $a \leftarrow \mathbb{Z}_t$ , a pseudo-Legendre symbol function $L_a : \mathbb{Z}_t \to \{0, 1\}$ may be defined as follows:

$$L_a(x) = \frac{\left((x - a)^{\frac{3\phi(t)}{2}} + 1\right)\left((x - a)^{\frac{3\phi(t)}{2}}\right)}{2}$$

Lemma 3. $L_a$ may have following properties.

$$L_a(x) = \begin{cases} 1 & if\ x - a\ is\ a\ square\ unit, \\ 0 & otherwise. \end{cases}$$

Therefore, $L_a = XU_a$, where $U_a := L_a^{-1}(1) \subset \mathbb{Z}_t$ and $|U_a| = \phi(t)/2$, and $Eval_{L_a}$ may be evaluated using $\lceil \log(3\phi(t)) \rceil$ homomorphic multiplications.

Before the proof, when p is the odd prime and $b \nmid p$, an equation $x^2 = b$ may have $1 + \left(\frac{b}{p}\right)$ solutions in $\mathbb{Z}_{p^r}$ . Here $\left(\frac{b}{p}\right)$ may correspond to a Legendre symbol [16].

Proof. Let y=x-a and let $J(y) = y^{\phi(t)/2}$. When y is a unit, $J(y)^2 = y^{\phi(t)}$ may correspond to 1, and does not correspond to 0 by Euler's theorem. When y is a unit, $J(y)^3 = J(y)$ may correspond to $\mathbb{Z}_t^\times$ , and when y is not a unit, $J(y)^3 = J(y)$ may correspond to 0. As described above, $\pm 1$ may correspond to only two square roots in $\mathbb{Z}_{p^r}$ . Therefore, when y is a unit, $J(y)=\pm 1$, and $J(y)^3$ may satisfy the following:

$$J(y)^3 = \begin{cases} 1 & if\ y\ is\ a\ square\ unit, \\ -1 & if\ y\ is\ a\ square\text{-}free\ unit, \\ 0 & if\ y\ is\ a\ non\text{-}unit. \end{cases}$$

By interpolating $J(y)^3$ on $(x + 1)x/2$, a desired result may be obtained.

Finally, for a unit group $G := \mathbb{Z}_t^\times$, a group homomorphism $\sigma : G \to G$, $y \mapsto y^2$ may have a kernel $\{\pm 1\}$.

Therefore, $|U_a| = |\mathrm{im}\ \sigma| = |G/\ker\sigma| = \phi(t)/2$. In addition, $\mathrm{Eval}_{J(y)^3}$ may be evaluated using $\lceil \log(3\phi(t))/2 \rceil$

homomorphic multiplications, and $L_a$ may thus require $\lceil \log(3\phi(t)) \rceil$ homomorphic multiplications.

When t is a prime, J(y) may refer to a Legendre symbol $\left(\frac{y}{t}\right)$. This symbol may indicate that $L_a$ is a

characteristic function of $U_a$ that is homomorphically evaluated using $O(\log(t)$. The present disclosure may treat

$$U_0 = \{u \in \mathbb{Z}_t^\times \,|\, u \text{ is a square unit.}\}$$ as a heuristic random subset of $\mathbb{Z}_t^\times$ having a size of $\phi$

(t)/2. In addition, the present disclosure may treats $L_a$ as a heuristic random characteristic function having a size of $\phi(t)/2$,

having a support $U_a = a+U_0 = \{a+u: u \in U_0\}$ and exceptionally satisfying $L_a(pk + a) = 0$ for $k \in \mathbb{Z}$.

The attacker may then use these functions to construct a characteristic function $\chi A$ whose asymptotic size is

$$|A| = \lfloor t/\mu \rfloor$$

. When $\chi B$ and $\chi C$ are given, $\chi B \cdot \chi C = \chi_{B \cap C}$ and $\mathrm{Normalize}_2(\chi_B + \chi_C) = \chi_{B \cup C}$. For example, when

$a_i := a + pi \in \mathbb{Z}_t$, an asymptotic size of $\bigcap_{i=1}^k U_{a_i} \subset (a + p\mathbb{Z}_t)^c$ may be approximately $\phi$

(t)/(2^k). When

$$k = \lfloor \log \mu \rfloor$$

is set by using this approximation, the attacker may efficiently construct $\chi A$ with an estimate of $A \subset \mathbb{Z}_t^\times$ so that

$$|A| \cong \lfloor \phi(t)/\mu \rfloor$$

. When $m \notin a + p\mathbb{Z}_t$, the attacker may achieve a maximum attack probability by pre-constructing a circuit for the heuristic random characteristic function $\chi A$ on $O(\log \mu \log t) = O(\log n \log t)$.
When covert adversaries exist, the processor 120 may prevent an attack by the covert adversaries. That is, the processor 120 may prevent the attack by the covert adversary through an operation identical to that in the present disclosure.

3.4 Attack against Replication Encoding under SHE

Reference [1] describes a Partially Oblivious PRF (POPRF) candidate and an extension for verifiability (VPOPRF) . POPRF may allow the server and the client to jointly compute a PRF z=F(k,x), where k may correspond to a secret PRF key of the server and x,z may correspond to private input and output of the client. When Verifiable Homomorphic Encryption (VHE) exists, a solution for VPOPRF may be provided. The client may outsource homomorphic encryption on x, the server may perform homomorphic operation on PRF F(k,x) by using its own secret PRF key k, and return an operation result. The server does not learn x or z, and the client may be assured of output z.
TFHE may correspond to a base HE for the present study. When a TFHE ciphertext space is referred to as C, a TFHE encryption of $x \in \mathbb{Z}_P$ may be written as $[x]_P \in \mathcal{C}$. For $\mathbf{x} = (x_1, \ldots, x_k) \in \mathbb{Z}_P^k$, $[x]_P$ may be denoted by a TFHE ciphertext string:

$$[\mathbf{x}]_P = ([x_1]_P, [x_2]_P, \ldots, [x_k]_P) \in \mathcal{C}^k$$

A proposal for a homomorphic PRF may use Mod2/Mod3 techniques. An embodiment describes a manner in which PRF F(k,x) is homomorphically operated by using parameters for a 128-bit secure OPRF. First, the client may input an encryption of a 128-bit string $\mathbf{x} \in \mathbb{Z}_2^{128}$, and only with homomorphic additions without bootstrapping, the server may homomorphically compute a 256-bit string over $\mathbb{Z}_2$, $\mathbf{y} \in \mathbb{Z}_2^{256}$ under the secret PRF key k of the server. The server may perform CPPBS$_{(2,3)}$, which is programmable bootstrapping, with the following feature:

$$\mathrm{CPPBS}_{(2,3)} = \begin{cases} [0]_2 \mapsto [0]_3 \\ [1]_2 \mapsto [1]_3 \end{cases}$$

This operation may be intended to obtain an encryption of $\mathbf{y} \in \mathbb{Z}_3^{256}$, and finally, only by homomorphic additions again, the server may compute an encryption of an 82-bit string $\mathbf{z} \in \mathbb{Z}_3^{82}$ as an output of PRF.

This homomorphic PRF may require a bootstrapping depth of 1. In addition, during programmable bootstrapping CPPBS$_{(2,3)}$, a key-switching key may be removed to change an encryption key, thereby restricting an execution of additional bootstrapping.

$$\mathsf{Eval}(\mathbf{k}, [\mathbf{x}]_2^{\mathrm{pk}}; F) : [\mathbf{x}]_2^{\mathrm{pk}} \in \mathcal{C}^{128} \overset{\mathbf{k}}{\mapsto} [\mathbf{y}]_2^{\mathrm{pk}} \in \mathcal{C}^{256} \overset{\mathrm{CPPBS}_{(2,3)}}{\mapsto} [\mathbf{y}]_3^{\mathrm{pk}'} \in \mathcal{C}^{256} \mapsto [\mathbf{z}]_3^{\mathrm{pk}'} \in \mathcal{C}^{82}$$

Replication Encoding under SHE. For verifiability, a similar method may be applied to Replication Encoding (REP). Assume that the client wants to evaluate $F(\mathbf{k},\mathbf{x}_i)$ for different $\mathbf{x}_i$, where i=1,...,$\alpha$, with a secret PRF key k held by the server.

- First, the server may publish checkpoint $\mathfrak{R} = \{(\mathbf{x}_k^\star, \mathbf{z}_k^\star = F(\mathbf{k}, \mathbf{x}_k^\star)) | k = 1 \ldots, \kappa\}$ in a plaintext state for κ=1,...,κ, and may not provide a zero-knowledge proof for the client to be assured of integrity of a result.

- The client may prepare and encrypt the following string vector:

$$\left( \overbrace{\mathbf{x}_1, \ldots, \mathbf{x}_1}^{\nu \text{ copies}}, \ldots, \overbrace{\mathbf{x}_\alpha, \ldots, \mathbf{x}_\alpha}^{\nu \text{ copies}}, \overbrace{\mathbf{x}_{k_1}^\star, \ldots, \mathbf{x}_{k_\beta}^\star}^{\beta} \right) \in (\mathbb{Z}_2^{128})^\gamma$$

Here, $\mathbf{x}_{k_j}^\star \overset{\$}{\leftarrow} \mathfrak{R}$ and γ=αν+β.

- The client may permute γ ciphertexts in a permutation $\rho \overset{\$}{\leftarrow} S_\gamma$ and transmit the same to the server. After the server performs an evaluation, the client may apply an inverse permutation $\rho^{-1}$ and perform decryption to obtain

$$Z = (\mathbf{z}_s) \in (\mathbb{Z}_3^{82})^\gamma \quad \text{for } 1 \le s \le \gamma.$$

The client may verify that the following are correct:

(a) For a set $\{\mathbf{z}_1,...,\mathbf{z}_\nu\}, \{\mathbf{z}_{\nu+1},...,\mathbf{z}_{2\nu}\},...,\{\mathbf{z}_{(\alpha-1)\nu+1},...,\mathbf{z}_{\alpha\nu}\}$, each set may include one common value and these $\alpha$ values may all be different.

(b)

$$\mathbf{z}_{\alpha\nu+j} = \mathbf{z}_{k_j}^{\star}$$

For 80-bit security for verifiability, proposed parameters may be $(\alpha,\beta,\nu) = (105, 10, 11)$ and $\gamma=1165$.

These parameters may suppress an attack through cheating circuits by restricting the number of bootstrappings to one bootstrapping. Heuristic security for verifiability may depend on a difficulty of constructing deep circuits under SHE.

Attack on Verifiability. Despite a limit on bootstrapping depth, the present disclosure may provide a cheating circuit that forges a result for $(a,\beta,\nu) = (105, 10, 11)$ with a successful attack probability. Assume that the attacker has $\alpha$ message points, each having a 128-bit string and $\beta$ checkpoints for computing an attack success probability on parameters. In addition, each message point is replicated $\nu$ times, and for $0 \le s < \alpha\nu+\beta=\gamma$, assume

$$\mathbf{x}_s = (x_{s,1},\ldots,x_{s,128}) \in \mathbb{Z}_2^{128}$$, and assume that $\gamma$ components are randomly permuted.

$\mathsf{Mult}_{(2,3)}^{k}$ : For $\mathbb{Z}_2^{k} \to \mathbb{Z}_3$, the following may be indicated:

$$\mathsf{Mult}_{(2,3)}^{k}(x_1,\cdots,x_k) = \begin{cases} 1 & \text{if } x_i = 1 \text{ for all } i \\ 0 & \text{otherwise.} \end{cases}$$

First, assume that programmable bootstrapping of TFHE may receive two ciphertexts as input.

$\mathsf{Eval}_{\mathsf{Mult}_{(2,3)}^{2}}([x]_2, [y]_2)$ may be evaluated at bootstrapping depth 1. By using this programmable bootstrapping, the present disclosure presents a cheating circuit as follows.

- An adversarial server may receive an input $ct_s := [\mathbf{x}_s]_2$ for $1 \le s \le \gamma$.
- The attacker may select two distinct positions $u_1, u_2 \leftarrow \{1,...,128\}$. For each s, the attacker may select $ct_{s,u_1}, ct_{s,u_2}$, which are the u1-th and u2-th TFHE ciphertexts of $ct_s$ and multiply the selected TFHE ciphertexts by $\mathsf{Mult}_{(2,3)}^{2}$ to

obtain $ct_{s,u} := \mathsf{Eval}_{\mathsf{Mult}_{(2,3)}^{2}}(ct_{s,u_1}, ct_{s,u_2})$ for $u = (u_1,u_2)$. The attacker may then generate 128 replicas. That is, the attacker may compute $ct_s' := ct_{s,u}(1,1,\ldots,1)$. $ct_s'$ may be either $([1]_3,...,[1]_3)$ or $([0]_3,...,[0]_3)$ with a probability of approximately 1/4 for each s.

- The attacker may add $ct_s'$ to an honest PRF result. That is, the attacker may compute

$$ct_s'' := \mathsf{Eval}_F(\mathbf{k}, ct_s) + ct_s' \quad \text{for each s.}$$

Assume that $ct_{s,u}$ corresponds to an encryption value of 0 with a probability of 3/4. Forgery may be successful when $ct_{s,u} = [0]_3$ for all s corresponding to $\beta$ checkpoints, and forgery may be successful when $ct_{s,u} = [1]_3$ for $\alpha$ message-

point slots. In this case, the probability may be $\left(\frac{3}{4}\right)^{\beta} - \left(\frac{3}{4}\right)^{\alpha+\beta}$, and may be approximately $2^{-4.16} \approx 5.6\%$ for parameters $\beta=10$ and $\alpha=105$. Details are described more precisely below.

Theorem 3. When a TFHE scheme supports k inputs per programmable bootstrapping, a depth-1 cheating circuit may exist for VOPRF with a success probability of $\left(\frac{2^k-1}{2^k}\right)^{\beta} - \left(\frac{2^k-1}{2^k}\right)^{\alpha+\beta}$.

To reduce the success probability to $2^{-\lambda}$ or less, $\beta$ is required to exceed $2^k \ln 2 \cdot \lambda$.

Proof. Select two different $u_1,...,u_k \leftarrow \{1,...,128\}$ and assume $u = (u_1,\cdots,u_k)$. For each s, the attacker may compute $ct_{s,u}$ as an output of $\mathsf{Eval}|_{\mathsf{Mult}_{(2,3)}^k}(ct_{s,u_1}, \ldots, ct_{s,u_k})$. With assumption of $ct_s' := ct_{s,u}(1,\ldots,1)$, each $ct_s'$ may correspond to an encryption of $([1]_3,...,[1]_3)$ with a probability of $1/2^k$ and may correspond to an encryption of $([0]_3,...,[0]_3)$ otherwise.

For forgery to be successful, all s may be required to correspond to checkpoints, i.e., $ct_{s,u} = ([0]_3,...,[0]_3)$, and at least one s may be required to correspond to a message point, i.e., $ct_{s,u} = ([1]_3,...,[1]_3)$. This probability may correspond to $\left(\frac{2^k-1}{2^k}\right)^{\beta} - \left(\frac{2^k-1}{2^k}\right)^{\alpha+\beta}$. Finally, by ignoring the second term, the probability may correspond to $\left(\frac{2^k-1}{2^k}\right)^{\beta} \leq \frac{1}{2^{\lambda}}$ at $\beta \geq \ln 2 \cdot 2^k \cdot \lambda$.

For example, reference [1] proposes a dishonest circuit of depth 2 using a CMUX gate, which requires three ciphertexts as input. For comparison, when assuming k=3 and parameters are $\beta=10$ and $\alpha=105$, an attack presented in the present disclosure may achieve a success probability of approximately $2^{-1.92} \approx 26.3\%$. Even when programmable bootstrapping does not support multiple inputs, when k=1, the attack presented in the present disclosure may secure a success probability of approximately $2^{-10} \approx 0.1\%$.

4 Attacks on Polynomial Encoding

4.1 Polynomial Encoding

An embodiment includes another proposed method for verification, referred to as Polynomial Encoding (PE). In PE, a plaintext space and a ciphertext space may correspond to BFV plaintext/ciphertext spaces and a new indeterminate X may be added thereto. More precisely, this encryption is as follows:

$$\mathbb{Z}_t^N[X] \xrightarrow{\mathsf{Enc_{PE}}} \mathcal{R}_q^2[X]$$

Here, $\mathsf{Enc_{PE}}$ may correspond to coefficient-wise BFV encryption. To avoid confusion, an element of

$$\mathcal{R}_q^2[X]$$

may be written as $F(X) = ct_0 + ct_1 X + \cdots + ct_d X^d$. Hereinafter, F(X) may be referred to as a ciphertext polynomial or simply as a polynomial, and each coefficient may be referred to as a ciphertext.

PE may be performed as follows. For the number of slots N, a random verification value $\mathbf{v} = (v_1, \ldots, v_N) \in \mathbb{Z}_t^N$ and a secret value $\alpha \in \mathbb{Z}_t^{\times}$ may be selected. Next, a message $\mathbf{m} = (m_1, \ldots, m_N) \in \mathbb{Z}_t^N$ and a verification value v may be interpolated at X=0 and X=$\alpha$, respectively.

Each message may then be encrypted coefficient-wise.

$$\mathbb{Z}_t^N \xrightarrow{\quad\mathsf{Enc}_{\mathsf{PE}}\quad} \mathbb{Z}_t^N[X] \longrightarrow \mathcal{R}_q^2[X]$$

$$\mathbf{m} \longmapsto \mathbf{m} + \left[\frac{\mathbf{v}-\mathbf{m}}{\alpha}\right]_t X \longmapsto \mathsf{ct}_0 + \mathsf{ct}_1 X$$

$$\mathsf{Enc}_{\mathsf{PE}}$$

The server may perform coefficient-wise operations such as addition, constant multiplication, rotation, or bootstrapping except multiplication. A multiplication may be evaluated as a polynomial in X. A multiplication of $\mathsf{ct}_0 + \mathsf{ct}_1 X$ and $\mathsf{ct}_2 + \mathsf{ct}_3 X$ may be as follows:

$$\mathsf{Mult}(\mathsf{ct}_0, \mathsf{ct}_2) + \mathsf{Mult}(\mathsf{ct}_1, \mathsf{ct}_2)X + \mathsf{Mult}(\mathsf{ct}_0, \mathsf{ct}_3)X + \mathsf{Mult}(\mathsf{ct}_1, \mathsf{ct}_3)X^2$$

When the server performs an operation correctly, a result

$$\mathsf{F}(X) \in \mathcal{R}_q^2[X]$$

may satisfy Dec(F(0)) = $f$(m) and Dec(F($\alpha$)) = $f$(v). Therefore, in a verification step, the client may check whether Dec($F(\alpha)$) = $f$(v) and obtain Dec($F$(0)) as $f$(m) when this condition is satisfied.

Re-Quadratization Protocol. As the computation proceeds, a degree of X may increase exponentially, which may cause a computation overhead. A client-assisted computation, i.e., Re-Quadratization (ReQ) protocol, may be used to reduce this overhead.

This protocol may maintain Dec($Q_4(\alpha)$) = Dec($Q_2(\alpha)$) and Dec($Q_4$(0)) = Dec($Q_2$(0)) while reducing a quartic polynomial

$$Q_4(X) \in \mathcal{R}_q^2[Y]$$

to a quadratic polynomial

$$Q_2(X) \in \mathcal{R}_q^2[Y]$$

. When the server multiplies two quadratic polynomials $Q_2'(X)$, $Q_2''(X)$, a result may be a quartic polynomial Q'$_4$ (X). The server may use ReQ to reduce this polynomial again to a quadratic polynomial $Q_2'''(X)$.

For example, when $Q_4(X) = \sum_{i=0}^4 \mathsf{ct}_i X^i$ is given, the server may transmit $\mathsf{ct}_3 X^3 + \mathsf{ct}_4 X^4$ to the client in a step of reducing the polynomial $Q_4(X)$ to a quadratic polynomial, the client may decrypt $\mathsf{ct}_3 X^3 + \mathsf{ct}_4 X^4$ and compute a ciphertext polynomial $\mathsf{ct}_1' X + \mathsf{ct}_2' X^2$ to allow $\mathsf{ct}_1' \alpha + \mathsf{ct}_2' \alpha^2$ to have the same decryption as $\mathsf{ct}_3 \alpha^3 + \mathsf{ct}_4 \alpha^4$. The client may transmit this ciphertext again to the server.

The server may evaluate a circuit by using

$$Q_2(X) = (\mathsf{ct}_0 + \mathsf{ct}_1 X + \mathsf{ct}_2 X^2) + (\mathsf{ct}_1' X + \mathsf{ct}_2' X^2)$$ . Values at X=0 and X=$\alpha$ remain the same

as those of an original ciphertext polynomial Q$_4$(X), and accordingly, ReQ does not cause an issue in verification or computation.

$$\mathrm{ct}_0 + \mathrm{ct}_1 X + \mathrm{ct}_2 X^2 + \underbrace{\mathrm{ct}_3 X^3 + \mathrm{ct}_4 X^4}_{3,4\text{th degree}} \overset{\mathrm{ReQ}}{\mapsto} \mathrm{ct}_0 + \mathrm{ct}_1 X + \mathrm{ct}_2 X^2 + \underbrace{\tilde{\mathrm{ct}_1} X + \tilde{\mathrm{ct}_2} X^2}_{1,2\text{nd degree}}$$

4.2 Attack on PE

The attacker may execute an honest circuit f that the client requests to evaluate and obtain a ciphertext polynomial F(X). In addition, the attacker may execute a malicious circuit g only on a constant term and obtain ct$_{forged}$. F($\alpha$) may correspond to an encryption of a verification value f(v) and ct$_{forged}$ may correspond to a malicious result that the attacker intends to return to the client.

To attack this verification successfully, a ciphertext polynomial H(X) transmitted by the attacker to the client may be required to satisfy following two conditions: Dec(H(0)) = Dec(ct$_{forged}$) and Dec(H($\alpha$)) = Dec(F($\alpha$)).

When considering a polynomial 1 - $X^{\phi(t)}$ for $\mathbb{Z}_t$, this polynomial outputs 0 for all $X \in \mathbb{Z}_t^\times$ and may output 1 for X=0 by Euler's theorem. Using this property, a ciphertext polynomial H(X) for any $\alpha \in \mathbb{Z}_t^\times$ may satisfy the following desired properties:

$$\mathsf{H}(X) := \mathsf{F}(X) + \left( (\mathrm{ct}_{\mathrm{forged}} - \mathsf{F}(0)) \left( 1 - X^{\phi(t)} \right) \right)$$

However, such an attack may be immediately detectable because a degree of X does not reach $\phi(t)$ or more when the server executes a circuit correctly. As a result, the user may immediately identify that H(X) is forged.

**Lowering deg H with ct$^{(\alpha)}$:** A method is described for reducing a degree of H(X) while maintaining Dec(H($\alpha$)) and Dec(H(0)) as the same. Let ct$^{(x)}$ be defined as an encryption of $(x, \ldots, x) \in \mathbb{Z}_t^N$, and consider what happens when the attacker forges ct$^{(\alpha)}$. By using a relation $X$ - ct$^{(\alpha)}$ = 0, the attacker may maintain values of H(0) and H($\alpha$) while manipulating H(X). This manipulation may be achieved by performing a transformation, for example, $X^{\phi(t)} \mapsto \mathrm{ct}^{(\alpha^{\phi(t)-1})}X$ to allow evaluations at X=0 and X=$\alpha$ to have identical implications. Therefore, the attacker may compute H by using F(X) + (ct$_{forged}$ - F(0))(1 - ct$^{(\alpha^{\phi(t)-1})}X$) and pass verification.

To recover ct$^{(\alpha)}$, the attacker may use the ReQ protocol. When ReQ is included in a computation routine, the attacker may learn $\alpha$ in an encrypted state. In ReQ, the server may reduce a quartic ciphertext polynomial Q$_4$(X) to a quadratic ciphertext polynomial Q$^2$(X) with assistance from the client, and may maintain decryptions at X=0 and X=$\alpha$ in this process. Accordingly, the server may obtain, in an encrypted state, the following relation for $\alpha$:

$$\mathrm{R}(X) := \mathrm{Q}_4(X) - \mathrm{Q}_2(X) = \mathrm{ct}_4 X^4 + \mathrm{ct}_3 X^3 - \tilde{\mathrm{ct}_2} X^2 - \tilde{\mathrm{ct}_1} X = \mathrm{Enc}(0)$$

In particular, R(X)/X = ct$_4X^3$ + ct$_3X^2$ - $\tilde{\mathrm{ct}_2}X$ - $\tilde{\mathrm{ct}_1}$ may be understood as a cubic equation that has a nonzero common root X=$\alpha$ in each of N slots in a homomorphic manner, and some preceding coefficients may be zero. Therefore, the attacker may recover ct$^{(\alpha)}$ by solving these N cubic equations using homomorphic operations. For example, when $\mathbb{Z}_t$ corresponds to a finite field, the attacker may homomorphically implement the Cantor-Zassenhaus algorithm [13] to factor these homomorphic cubic equations.

**Euclidean Division on** $\mathcal{R}_q^2[X]$. Although using the homomorphic Cantor-Zassenhaus algorithm is an attractive selection, the present disclosure describes a more efficient method for reducing a degree. A transformation from $X^{\phi(t)}$ to Enc($\alpha^{\phi(t)-1}$)X for maintaining evaluations at X=$\alpha$ and X=0 may be understood as an equation $X^{\phi(t)}$ = ct$^{(\alpha^{\phi(t)-1})}X$ mod (ct$^{(1)}X^2$ - ct$^{(\alpha)}X$). That is, ct$^{(1)}X^{\phi(t)}$ and ct$^{(\alpha^{\phi(t)-1})}X$ may be identical elements in $\mathcal{R}_q^2[X]/(X^2 - \mathrm{ct}^{(\alpha)}X)$.

Considering that another homomorphic relation R(X) = Q$_4$(X)-Q$_2$(X) for X=$\alpha$ and X=0 is provided from ReQ, the attacker may consider $\mathcal{R}_q^{-2}[X]/(\mathrm{R}(X))$ instead of $\mathcal{R}_q^2[X]/(\mathrm{ct}^{(1)}X^2 - \mathrm{ct}^{(\alpha)}X)$, which seems to be difficult to compute $ct^{(\alpha)}$.

However, even when $\mathcal{R}_q^2[X]/(R(X))$ is properly defined, reducing a degree by using modulo R(X) may be a separate issue. For example, a polynomial $3X^{10} \in \mathbb{Z}[X]/(2X)$ is unable to be reduced below degree 10. The reason is that 2X does not correspond to a monic polynomial, and accordingly, Euclidean division by 2X is not properly defined over Z[X]. A similar issue may also arise in $\mathcal{R}_q^2[X]/(R(X))$.

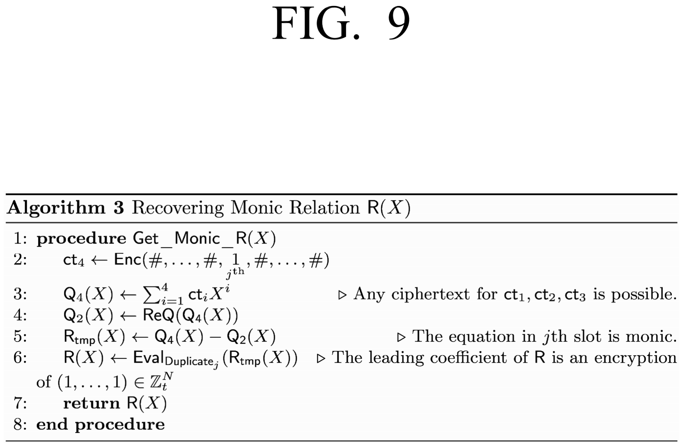

To resolve this issue, the present disclosure may form R(X) as a ciphertext including a monic polynomial for $\mathbb{Z}_t^N$. Considering that a leading term $ct_4$ of R(X) may be manipulated as desired by the attacker before ReQ is applied, the attacker may proceed as follows. First, the attacker may set one slot of $ct_4$, for example a j-th slot, to 1. Next, the attacker may request ReQ from the client by using $Q_4 = ct_4 X^4 + ...$ to obtain a quadratic polynomial $Q_2(X)$ and set $R(X) = Q_4(X) - Q_2(X)$ so that the quartic equation in the j-th slot of $R(X)$ becomes monic. The attacker may then replicate the j-th slot to other slots. As a result, as illustrated in FIG. 9, a leading coefficient of R(X) may be written as $ct_4'$, which corresponds to a ciphertext of $(1, \ldots, 1) \in \mathbb{Z}_t^N$.

A monic relation $R(X) = ct_4' X^4 + ct_3' X^3 + ct_2' X^2 + ct_1' X$ may then have roots at $X=\alpha$ and $X=0$. Using this monic polynomial R(X), Euclidean division in $\mathcal{R}_q^2[X]$ may be defined. This configuration may resemble Euclidean division in polynomial algebra over a ring. Only remainder polynomials are relevant to the present disclosure, and quotient polynomials may therefore be omitted. Here, lc(F(X)) may denote a ciphertext including the leading coefficient of F(X).

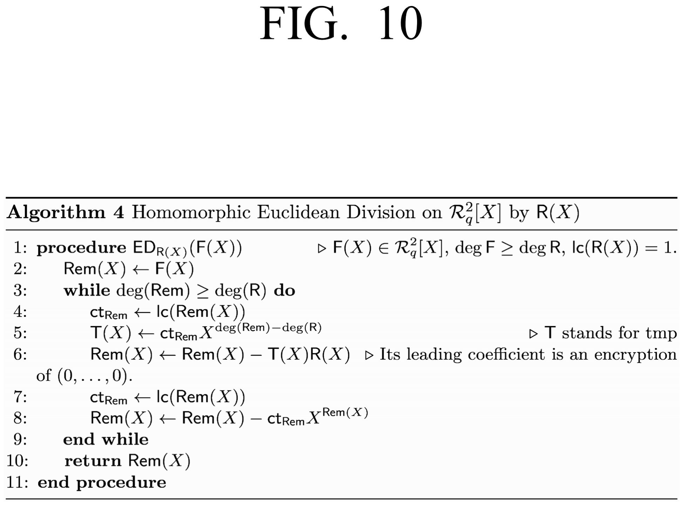

As illustrated in FIG. 10, a while loop from lines 3 to 9 may be repeated deg(F)-deg(R)+1 times.

Even when it is unclear whether $ct_{Rem}$ corresponds to a ciphertext including a zero vector, this unclearness does not affect correctness of Algorithm 4 for homomorphic Euclidean division illustrated in FIG. 10. When $ct_{Rem}$ corresponds to the ciphertext including a zero vector, T(X) may become a ciphertext including a zero polynomial $0 \in \mathbb{Z}_t^N[X]$. Therefore, a degree of Rem(X) may decrease although decryption of Rem(X) at line 6 of Algorithm 4 may remain unchanged.

Lowering deg H with R(X). The attacker may then reduce a degree of $H(X) = F(X) + ((ct_{forged} - F(0))(1 - X^{\phi(t)}))$. A direct evaluation of $ED_{R(X)}(X^{\phi(t)})$ requires O(t) Euclidean divisions, which may incur a large cost. However, the attacker may square X repeatedly and evaluate $X^{\phi(t)} \in \mathcal{R}_q^2[X]/(R(X))$ more efficiently. As a result, the attacker may compute $X^{\phi(t)} = \sum_{i=1}^{\deg R - 1} ct_i X^i \pmod{R(X)}$ efficiently. The following ciphertext polynomial may pass verification:

$$\tilde{H}(X) = F(X) + \left( (ct_{forged} - F(0)) \left( 1 - \sum_{i=1}^{\deg R - 1} ct_i X^i \right) \right)$$

Therefore, as long as a non-trivial homomorphic monic relation R(Y) for $\alpha$ is given to the server, this attack may remain feasible. A summary is as follows.

Lemma 4. A cost for computing $X^{\phi(t)} = \sum_{i=1}^{\deg R - 1} ct_i X^i \in \mathcal{R}_q^2[X]/(R(X))$ may correspond to at most $((\deg R)^2 + \deg R - 1)\lceil \log t \rceil$ homomorphic multiplications in $\mathcal{R}_q^2$.

Proof. First, the number of multiplications in $\mathcal{R}_q^2$ per multiplication in $\mathcal{R}_q^2[X]/(R(X))$ is obtained as follows.

- Multiplying $\sum_{i=0}^{\deg R - 1} ct_i X^i$ and $\sum_{i=0}^{\deg R - 1} ct_i' X^i$ in $\mathcal{R}_q^2[X]$ requires at most $(\deg R)^2$ multi-

plications in $\mathcal{R}_q^2$ , and a resulting degree deg(F(X)) may be F = (2 deg R - 2).

- Next, $\text{ED}_{R(X)}(\text{F}(X))$ invokes the while-loop of Algorithm 4 for at most (2 deg R - 2) - deg R + 1 iterations, and each iteration invokes one multiplication in $\mathcal{R}_q^2$ .

- Summing these results, one multiplication in $\mathcal{R}_q^2[X]/(\text{R}(X))$ may invoke at most $((\deg R)^2 + \deg R - 1)$ multiplications in $\mathcal{R}_q^2$ .

Evaluating $X^{\phi(t)}$ in $\mathcal{R}_q^2[X]/(\text{R}(X))$ may require $\lceil \log t \rceil$ multiplications in $\mathcal{R}_q^2[X]/\text{R}(X)$. As a result, a total cost may correspond to at most $((\deg \text{R})^2 + \deg \text{R} - 1)\lceil \log t \rceil$ multiplications in $\mathcal{R}_q^2$ .

Theorem 4. PE may break with probability 1 within $O((\deg \text{R})^2 \log(t))$ homomorphic multiplications in $\mathcal{R}_q^2$ .

Proof. The above result may be derived immediately from Lemma 4 and definition (1) of Ħ.

5 Discussion

The attack presented in the present disclosure includes two main steps:

1. Recovering partial information regarding $\alpha$ or S in an encrypted state.
2. Next, homomorphically forging ciphertext.

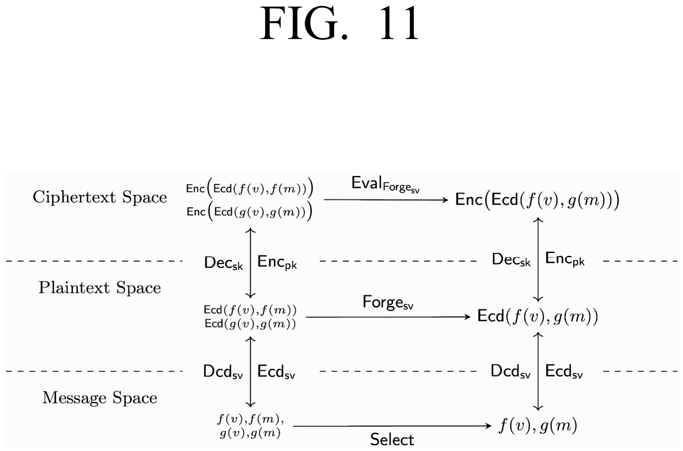

Regarding the second core step, in a plaintext state, forgery in verifiable encoding may merely correspond to a composition of decryption and encoding, where the decryption and the encoding may be performed with assistance of a secret value sv=S or $\alpha$. That is, $\text{Dcd}_{sv}$ and $\text{Ecd}_{sv}$ may be used. Therefore, the attack described above may correspond to a homomorphic evaluation of such a forgery circuit with assistance of information on sv=S or $\alpha$ in an encrypted state, as illustrated in FIG. 11.

In REP, a secret value for decryption and encoding may correspond to a verification set S. Homomorphic decryption may simply mask a ciphertext by multiplying ciphertexts of $J_S$ and $J_{Sc}$. In addition, homomorphic encoding may add ciphertexts masked by both S and $S^c$. Next, in PE, decryption may correspond to an evaluation at X=$\alpha$ and X=0, and encoding may correspond to an interpolation at X=$\alpha$ and X=0. Although homomorphic Euclidean division may convert $X^{\phi(t)}$ to $X^{\phi(t)} \bmod \text{R}(Y)$ for generating a new polynomial, evaluations at X=0 and X=$\alpha$ may remain the same.

Homomorphic Cryptanalysis. When these encodings are regarded as insecure homomorphic encryption under a secret (symmetric) key S or $\alpha$, REP and PE may operate as double homomorphic encryption. First, a message may be encrypted insecurely under S or $\alpha$, and then be re-encrypted under secure homomorphic encryption.

The attacks presented in the present disclosure may be interpreted as homomorphic implementations of cryptanalysis for fundamentally insecure encoding schemes such as REP and PE. That is, attacking these schemes may correspond to homomorphic cryptanalysis for the fundamentally insecure encoding schemes.

The attacker may prepare a circuit that attacks ciphertexts encrypted under sv and implement this circuit homomorphically. In REP, this attack may include identifying a common value. Replicated encodings under different keys may involve guessing a specific value among $\mu = |\mathcal{V}|$ elements. In PE, replicated encodings may include solving cubic equations for $\mathbb{Z}_t$ or generally include performing Euclidean division. The attacks presented in the present disclosure may merely correspond to homomorphic implementations of these cryptanalytic operations.

Several patches may be considered to defend against attacks on REP. For example, such patches may include restricting homomorphic evaluation operations. However, restricting operations between ciphertexts under different keys may not provide a defense. A potential approach may correspond to the use of SHE. However, SHE may operate only under restricted conditions.

Furthermore, uncertainty may remain regarding this security assumption, given that security assumption that deep circuits are difficult to implement under SHE is heuristic, and that a cheating circuit attack is thus devised even at bootstrapping depth 1.

6 Conclusion

The present disclosure presents attacks against a plurality of verifiable homomorphic encryption schemes. First, the attack may be attempted on RE. The attacker may forge an operation result by constructing a circuit that homomorphically computes a position vector of a common value. This attack may have a success probability of 1, and a cost of $O(n\log t)$.

Next, the present disclosure may investigate whether REP is patchable under FHE. Even when operations between ciphertexts are restricted, attacks based on random characteristic functions may remain feasible. In detail, a random characteristic function may be efficiently constructed under BFV. This attack may have a success probability of $(e\mu)^{-1}$ and a cost of $O(\log n\log t)$. This attack may indicate that replication-based approaches are unable to provide security against malicious attackers.

In addition, attacks presented in the present disclosure may be attempted on VOPRF schemes that use replication encoding under SHE. Work in prior art may identify attacks using homomorphic cheating circuits and restrict the number of sequential bootstrappings to one to limit such circuits. However, the present disclosure may identify another cheating circuit that operates under bootstrapping depth 1 and affects only $\beta$ checkpoints while not affecting replication. For k inputs per PBS, an attack may have a success probability of $2^{-\beta(2^k\ln 2)^{-1}}$, and a cost of $O(\gamma)$. This attack may indicate that heuristic security that relies on an assumption that it is difficult to make deep circuits shallow does not ensure security.

Finally, the attacks may be attempted on PE. This problem may reduce to defining Euclidean division over $\mathcal{R}_q^2[X]$. The present disclosure presents a method for determining a monic relation for $\alpha$. Using the monic polynomial, the attacker may then define Euclidean division over $\mathcal{R}_q^2[X]$ and forge computation results efficiently. This attack may have a success probability of 1, and a cost of $O(\deg R^2 \log t)$.

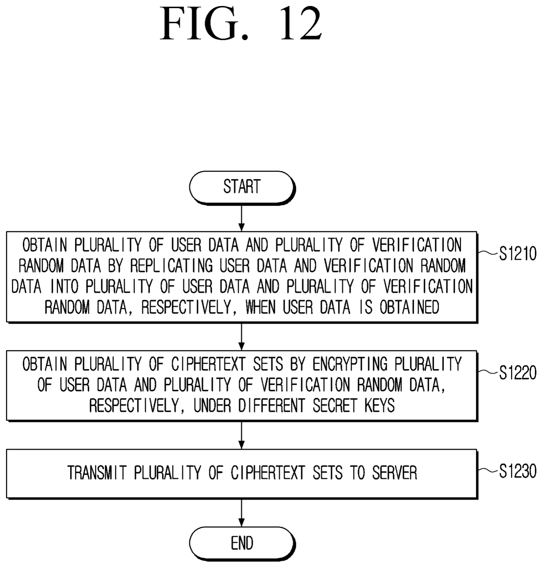

FIG. 12 is a flowchart illustrating a control method of an electronic apparatus according to an embodiment of the present disclosure.

First, the method may include obtaining a plurality of user data and a plurality of verification random data by replicating user data and verification random data into the plurality of user data and the plurality of verification random data, respectively, when the user data is obtained (S1210). In addition, the method may include obtaining a plurality of ciphertext sets by encrypting the plurality of user data and the plurality of verification random data, respectively, under different secret keys (S1220). In addition, the method may include transmitting the plurality of ciphertext sets to a server (S1230).

In addition, the method may further include receiving a homomorphic operation result from the server, and identifying validity of the homomorphic operation result by performing a decryption and verification procedure on the homomorphic operation result.

In addition, the identifying of the validity may include identifying the validity of the homomorphic operation result by identifying whether a result corresponding to the plurality of random data for verification in the homomorphic operation result matches a pre-stored value.

In addition, the identifying of the validity may include identifying the validity of the homomorphic operation result by identifying whether a plurality of results respectively corresponding to the plurality of user data in the homomorphic operation result match one another.

In addition, the method may further include invalidating the homomorphic operation result and providing an error state when an attack attempt is identified through the verification procedure.

In addition, the obtaining of the plurality of ciphertext sets (S1220) may include rearranging the plurality of user data and the plurality of verification random data according to a random permutation rule, and obtaining the plurality of ciphertext sets by encrypting the plurality of rearranged user data and the plurality of rearranged verification random data, respectively, under different secret keys.

In addition, the obtaining of the plurality of ciphertext sets (S1220) may include performing encryption and operation on each component in the plurality of ciphertext sets under different secret keys and evaluation keys corresponding to the secret keys.

In addition, the method may further include updating the plurality of ciphertext sets by inserting random padding or additional random number elements into the plurality of ciphertext sets, and transmitting the plurality of updated ciphertext sets to the server.

References

1. Albrecht, M.R., Davidson, A., Deo, A., Gardham, D.: Crypto dark matter on the torus: Oblivious PRFs from shallow PRFs and TFHE. In: Advances in Cryptology - EUROCRYPT 2024: 43rd Annual International Conference on the Theory and Applications of Cryptographic Techniques, Zurich, Switzerland, May 26-30, 2024, Proceedings, Part VI. p. 447-476. Springer-Verlag, Berlin, Heidelberg (2024). https://doi.org/10.1007/978-3-031-58751-1_16

2. Atapoor, S., Baghery, K., Pereira, H.V.L., Spiessens, J.: Verifiable FHE via latticebased SNARKs. IACR Communications in Cryptology 1(1) (2024). https://doi.org/10.62056/a6ksdkp10

3. Boneh, D., Ishai, Y., Passelegue, A., Sahai, A., Wu, D.J.: Exploring crypto dark matter: New simple PRF candidates and their applications. In: Theory of Cryptography: 16th International Conference, TCC 2018, Panaji, India, November 11-14, 2018, Proceedings, Part II. p. 699-729. Springer-Verlag, Berlin, Heidelberg (2018). https://doi.org/10.1007/978-3-030-03810-6_25

4. Brakerski, Z., Gentry, C., Vaikuntanathan, V.: (leveled) fully homomorphic encryption without bootstrapping. In: Proceedings of the 3rd Innovations in Theoretical Computer Science Conference. p. 309-325. ITCS '12, Association for Computing Machinery, New York, NY, USA (2012). https://doi.org/10.1145/2090236. 2090262

5. Chatel, S., Knabenhans, C., Pyrgelis, A., Troncoso, C., Hubaux, J.P.: VERITAS: Plaintext encoders for practical verifiable homomorphic encryption. CCS'24, Association for Computing Machinery, New York, NY, USA (2024). https://doi.org/10.1145/3658644.3670282

6. Chen, H., Huang, Z., Laine, K., Rindal, P.: Labeled psi from fully homomorphic encryption with malicious security. In: Proceedings of the 2018 ACM SIGSAC Conference on Computer and Communications Security. p. 1223-1237. CCS '18, Association for Computing Machinery, New York, NY, USA (2018). https://doi.org/10.1145/3243734.3243836

7. Cheon, J.H., Kim, A., Kim, M., Song, Y.: Homomorphic encryption for arithmetic of approximate numbers. In: Takagi, T., Peyrin, T. (eds.) Advances in Cryptology - ASIACRYPT 2017. pp. 409-437. Springer International Publishing, Cham (2017)

8. Chillotti, I., Gama, N., Georgieva, M., Izabachene, M.: TFHE: Fast fully homomorphic encryption over the torus. J. Cryptol. 33(1), 34-91 (Jan 2020). https://doi.org/10.1007/s00145-019-09319-x

9. Damgard, I.B.: On the randomness of Legendre and Jacobi sequences. In: Goldwasser, S. (ed.) Advances in Cryptology - CRYPTO' 88. pp. 163-172. Springer New York, New York, NY (1990)

10. Fan, J., Vercauteren, F.: Somewhat practical fully homomorphic encryption. Cryptology ePrint Archive, Paper 2012/144 (2012), https://eprint.iacr.org/2012/144, https://eprint.iacr.org/2012/144

11. Fiore, D., Gennaro, R., Pastro, V.: Efficiently verifiable computation on encrypted data. In: Proceedings of the 2014 ACM SIGSAC Conference on Computer and Communications Security. p. 844-855. CCS '14, Association for Computing Machinery, New York, NY, USA (2014). https://doi.org/10.1145/2660267. 2660366

12. Fiore, D., Nitulescu, A., Pointcheval, D.: Boosting verifiable computation on encrypted data. In: Kiayias, A., Kohlweiss, M., Wallden, P., Zikas, V. (eds.) Public-Key Cryptography - PKC 2020. pp. 124-154. Springer International Publishing, Cham (2020)

13. von zur Gathen, J., Gerhard, J.: Modern Computer Algebra. Cambridge University Press, 3 edn. (2013)

14. Geelen, R., Vercauteren, F.: Bootstrapping for BGV and BFV revisited. J. Cryptol. 36(2) (Mar 2023). https://doi.org/10.1007/s00145-023-09454-6

15. Gennaro, R., Gentry, C., Parno, B.: Non-interactive verifiable computing: Outsourcing computation to untrusted workers. In: Rabin, T. (ed.) Advances in Cryptology - CRYPTO 2010. pp. 465-482. Springer Berlin Heidelberg, Berlin, Heidelberg (2010)

16. Ireland, K.F., Rosen, M.I.: A classical introduction to modern number theory / Kenneth Ireland, Michael, Michael Rosen. Graduate texts in mathematics; 84, Springer, New York (1982)

17. Joye, M.: Guide to fully homomorphic encryption over the [discretized] torus. IACR Transactions on Cryptographic Hardware and Embedded Systems 2022(4), 661-692 (Aug 2022). https://doi.org/10.46586/tches.v2022.i4.661-692

18. Lindell, Y.: Fast cut-and-choose-based protocols for malicious and covert adversaries. J. Cryptol. 29(2), 456-490 (Apr 2016). https://doi.org/10.1007/s00145-015-9198-0

As described above, the electronic apparatus may increase the security performance by encrypting the plurality of user data and the plurality of verification random data under different secret keys to obtain the plurality of ciphertext sets.

Meanwhile, according to an embodiment of the disclosure, the various embodiments described above may be implemented in software including an instruction stored in a machine-readable storage medium that may be read by a machine (e.g., computer). The machine may be a device that invokes the stored instruction from a storage medium, may be operated based on the invoked instruction, and may include an electronic apparatus (e.g., electronic apparatus A) according to the disclosed embodiments. When the instruction is executed by the processor, the processor may directly perform a function corresponding to the instruction, or perform the function by using other components under control of the processor. The instruction may include codes provided or executed by a compiler or an interpreter. The machine-readable storage medium may be provided in the form of a non-transitory storage medium. Here, the term "non-transitory" refers to that the storage medium is tangible without including a signal, and does not distinguish whether data are semi-permanently or temporarily stored on the storage medium.

In addition, according to an embodiment, the methods according to the various embodiments described above may be included and provided in a computer program product. The computer program product may be traded as a commodity between a seller and a purchaser. The computer program product may be distributed in a form of the machine-readable storage medium (e.g., a compact disc read only memory (CD-ROM)), or may be distributed online through an application store (e.g., PlayStore™). In case of the online distribution, at least a part of the computer program product may be at least temporarily stored or temporarily provided on a storage medium such as the memory of a manufacturer server, an application store server, or a relay server.

In addition, according to an embodiment of the present disclosure, the various embodiments described above may be implemented in a computer-readable recording medium or a device similar thereto that uses software, hardware, or a combination of software and hardware. In some cases, the embodiments described in the specification may be implemented by a processor itself. According to software implementation, the embodiments such as the procedures and functions described in the specification may be implemented by separate software modules. Each of the software modules may perform at least one function or operation described in the specification.

Meanwhile, computer instructions for performing processing operations of the device according to the various embodiments described above may be stored in a non-transitory computer-readable medium. When executed by a processor of a specific device, the computer instructions stored in such a non-transitory computer-readable medium may cause the specific device to perform the processing operations of the device according to the various embodiments described above. The term "non-transitory computer-readable medium" refers to a medium that temporarily stores data, such as a register, a cache, or a memory, and indicates a medium that semi-permanently stores data and is readable by the device. A specific example of the non-transitory computer-readable recording medium may include a compact disk (CD), a digital versatile disk (DVD), a hard disk, a Blu-ray disk, a universal serial bus (USB), a memory card, a read-only memory (ROM), or the like.

In addition, each of the components (e.g., modules or programs) according to the various embodiments described above may include a single entity or a plurality of entities, and some of the corresponding sub-components described above may be omitted or other sub-components may be further included in the various embodiments. Alternatively or additionally, some of the components (e.g., the modules or the programs) may be integrated into one entity, and may perform functions performed by the respective corresponding components before integration in the same or similar manner. Operations performed by the modules, the programs or other components according to the various embodiments may be executed in a sequential manner, a parallel manner, an iterative manner or a heuristic manner, at least some of the operations may be performed in a different order or be omitted, or other operations may be added.

Hereinabove, the embodiments of the present disclosure are illustrated and described. However, the present disclosure is not limited to the specific embodiments described above, and various modifications may be made by those skilled in the art without departing from the spirit or scope of the present disclosure as defined by the claims. Such modifications should also be understood to fall within the spirit and scope of the present disclosure.

[Description of Reference Numerals]

100: electronic apparatus
110: memory
120: communication interface
130: processor

**Claims**

1. An electronic apparatus comprising:

   a memory storing instructions;
   a communication interface; and
   at least one processor including processing circuitry,
   wherein the at least one processor is configured to
   obtain a plurality of user data and a plurality of verification random data by replicating user data and verification random data into the plurality of user data and the plurality of verification random data, respectively, when the user data is obtained,
   obtain a plurality of ciphertext sets by encrypting the plurality of user data and the plurality of verification random data, respectively, under different secret keys, and
   control the communication interface to transmit the plurality of ciphertext sets to a server.

2. The apparatus as claimed in claim 1, wherein the at least one processor is configured to

receive a homomorphic operation result from the server through the communication interface, and
identify validity of the homomorphic operation result by performing a decryption and verification procedure on the homomorphic operation result.

3. The apparatus as claimed in claim 2, wherein the at least one processor is configured to identify the validity of the homomorphic operation result by identifying whether a result corresponding to the plurality of verification random data in the homomorphic operation result matches a pre-stored value.

4. The apparatus as claimed in claim 2, wherein the at least one processor is configured to identify the validity of the homomorphic operation result by identifying whether a plurality of results respectively corresponding to the plurality of user data in the homomorphic operation result match one another.

5. The apparatus as claimed in claim 2, wherein the at least one processor is configured to invalidate the homomorphic operation result and provide an error state when an attack attempt is identified through the verification procedure.

6. The apparatus as claimed in claim 1, wherein the at least one processor is configured to

rearrange the plurality of user data and the plurality of verification random data according to a random permutation rule, and
obtain the plurality of ciphertext sets by encrypting the plurality of rearranged user data and the plurality of rearranged verification random data, respectively, under different secret keys.

7. The apparatus as claimed in claim 1, wherein the at least one processor is configured to perform encryption and operation on each component in the plurality of ciphertext sets under different secret keys and evaluation keys corresponding to the secret keys.

8. The apparatus as claimed in claim 1, wherein the at least one processor is configured to

update the plurality of ciphertext sets by inserting random padding or additional random number elements into the plurality of ciphertext sets, and
control the communication interface to transmit the plurality of updated ciphertext sets to the server.

9. A control method of an electronic apparatus, the method comprising:

obtaining a plurality of user data and a plurality of verification random data by replicating user data and verification random data into the plurality of user data and the plurality of verification random data, respectively, when the user data is obtained;
obtaining a plurality of ciphertext sets by encrypting the plurality of user data and the plurality of verification random data, respectively, under different secret keys; and
transmitting the plurality of ciphertext sets to a server.

10. The method as claimed in claim 9 further comprising:

receiving a homomorphic operation result from the server; and
identifying validity of the homomorphic operation result by performing a decryption and verification procedure on the homomorphic operation result.

11. The method as claimed in claim 10, wherein the identifying of the validity includes identifying the validity of the homomorphic operation result by identifying whether a result corresponding to the plurality of verification random data in the homomorphic operation result matches a pre-stored value.

12. The method as claimed in claim 10, wherein the identifying of the validity includes identifying the validity of the homomorphic operation result by identifying whether a plurality of results respectively corresponding to the plurality of user data in the homomorphic operation result match one another.

13. The method as claimed in claim 10 further comprising invalidating the homomorphic operation result and providing an error state when an attack attempt is identified through the verification procedure.

14. The method as claimed in claim 9, wherein the obtaining of the plurality of ciphertext sets includes

rearranging the plurality of user data and the plurality of verification random data according to a random permutation rule, and
obtaining the plurality of ciphertext sets by encrypting the plurality of rearranged user data and the plurality of rearranged verification random data, respectively, under different secret keys.

15. The method as claimed in claim 9, wherein the obtaining of the plurality of ciphertext sets includes performing encryption and operation on each component in the plurality of ciphertext sets under different secret keys and evaluation keys corresponding to the secret keys.

16. The method as claimed in claim 9 further comprising:

updating the plurality of ciphertext sets by inserting random padding or additional random number elements into the plurality of ciphertext sets; and
transmitting the plurality of updated ciphertext sets to the server.

17. A non-transitory computer-readable recording medium storing a program for executing a method for operating an electronic apparatus, wherein the method includes

obtaining a plurality of user data and a plurality of verification random data by replicating user data and verification random data into the plurality of user data and the plurality of verification random data, respectively, when the user data is obtained,
obtaining a plurality of ciphertext sets by encrypting the plurality of user data and the plurality of verification random data, respectively, under different secret keys, and
transmitting the plurality of ciphertext sets to a server.

# FIG. 1

# FIG. 2

2000

200

FIRST SERVER

$Ct_1, Ct_2$    $Ct_1 + Ct_2$

10

NETWORK

$Ct_1 + Ct_2$

300

SECOND SERVER

$Ct_1$    $Ct_2$

FIRST ELECTRONIC APPARATUS    SECOND ELECTRONIC APPARATUS    . . .    N-TH ELECTRONIC APPARATUS

100-1    100-2    100-n

# FIG. 3

# FIG. 4

| m | $v_1$ | $v_2$ | m | $v_3$ | m | $v_4$ | m |
|---|---|---|---|---|---|---|---|

$i = 1 \rightarrow$

| 1 | 0 | 0 | 1 | 0 | 1 | 0 | 1 |
|---|---|---|---|---|---|---|---|

| m | $v_1$ | $v_2$ | m | $v_3$ | m | $v_4$ | m |
|---|---|---|---|---|---|---|---|

$i = 2 \rightarrow$

| 0 | 1 | 0 | 0 | 0 | 0 | 0 | 0 |
|---|---|---|---|---|---|---|---|

# FIG. 5

**Algorithm 1** Finding Common Value Slots

1: **procedure** $\mathsf{CVS}_i(\mathsf{ct})$
2:     $\mathsf{ct}' \leftarrow \mathsf{Eval}_{\mathsf{Duplicate}_i}(\mathsf{ct})$                    $\triangleright \mathsf{ct}' = \mathsf{Enc}((x_i, \ldots, x_i))$
3:     $\mathsf{ct}_{\mathsf{CVS},i} \leftarrow \mathsf{Eval}_{\mathsf{Compare}}(\mathsf{ct}', \mathsf{ct})$
4:     **return** $\mathsf{ct}_{\mathsf{CVS},i}$
5: **end procedure**

# FIG. 6

---

**Algorithm 2** Probability 1 Attack on REP

---

1: **procedure** $\text{is\_in\_set}_S(\text{ct}, i)$
2:     $\text{ct}_{\text{cvs},i} \leftarrow \text{CVS}_i(\text{ct})$
3:     $\text{ct}_{\text{rs}} \leftarrow \text{RotSum}(\text{ct}_{\text{cvs},i})$          $\triangleright\ \text{ct}_{\text{rs}} = \text{Enc}((1,\dots,1))\ \text{or}\ \text{Enc}((n/2,\dots,n/2))$
4:     $\text{ct}_{\text{bool},i} \leftarrow \text{Eval}_{\text{Interpolate}}(\text{ct}_{\text{rs}})$
5:     **return** $\text{ct}_{\text{bool},i}$          $\triangleright\ \text{ct}_{\text{bool},i} = \text{Enc}((0,\dots,0))\ \text{or}\ \text{Enc}((1,\dots,1))$
6: **end procedure**
7:
8: **procedure** $\text{Recover}_S(\text{ct})$
9:     $\text{ct}_{\text{cvs},i} \leftarrow \text{CVS}_i(\text{ct})$
10:     $\text{ct}_{\text{bool},i} \leftarrow \text{is\_in\_set}_S(\text{ct}, i)$
11:     $\text{ct}'_S \leftarrow \sum_{i=1}^{1+n/2} \text{Mult}(\text{ct}_{\text{bool,i}}, \text{ct}_{\text{cvs,i}})$
12:     $\text{ct}_S \leftarrow \text{Eval}_{\text{Normalize}_{n/2+1}}(\text{ct}'_S)$
13:     **return** $\text{ct}_S$
14: **end procedure**

---

# FIG. 7

# FIG. 8

# FIG. 9

---

**Algorithm 3** Recovering Monic Relation $\mathsf{R}(X)$

---

1: **procedure** $\mathsf{Get\_Monic\_R}(X)$
2: $\quad \mathsf{ct}_4 \leftarrow \mathsf{Enc}(\#, \ldots, \#, \underset{j^{\text{th}}}{1}, \#, \ldots, \#)$

3: $\quad \mathsf{Q}_4(X) \leftarrow \sum_{i=1}^{4} \mathsf{ct}_i X^i \qquad\qquad$ ▷ Any ciphertext for $\mathsf{ct}_1, \mathsf{ct}_2, \mathsf{ct}_3$ is possible.
4: $\quad \mathsf{Q}_2(X) \leftarrow \mathsf{ReQ}(\mathsf{Q}_4(X))$
5: $\quad \mathsf{R}_{\mathsf{tmp}}(X) \leftarrow \mathsf{Q}_4(X) - \mathsf{Q}_2(X) \qquad\qquad$ ▷ The equation in $j$th slot is monic.
6: $\quad \mathsf{R}(X) \leftarrow \mathsf{Eval}_{\mathsf{Duplicate}_j}(\mathsf{R}_{\mathsf{tmp}}(X)) \quad$ ▷ The leading coefficient of $\mathsf{R}$ is an encryption
$\quad$ of $(1, \ldots, 1) \in \mathbb{Z}_t^N$
7: $\quad$ **return** $\mathsf{R}(X)$
8: **end procedure**

---

# FIG. 10

---

**Algorithm 4** Homomorphic Euclidean Division on $\mathcal{R}_q^2[X]$ by $\mathsf{R}(X)$

---

1: **procedure** $\mathsf{ED}_{\mathsf{R}(X)}(\mathsf{F}(X))$      $\triangleright$ $\mathsf{F}(X) \in \mathcal{R}_q^2[X]$, $\deg \mathsf{F} \geq \deg \mathsf{R}$, $\mathsf{lc}(\mathsf{R}(X)) = 1$.

2:      $\mathsf{Rem}(X) \leftarrow \mathsf{F}(X)$

3:      **while** $\deg(\mathsf{Rem}) \geq \deg(\mathsf{R})$ **do**

4:          $\mathsf{ct}_{\mathsf{Rem}} \leftarrow \mathsf{lc}(\mathsf{Rem}(X))$

5:          $\mathsf{T}(X) \leftarrow \mathsf{ct}_{\mathsf{Rem}} X^{\deg(\mathsf{Rem}) - \deg(\mathsf{R})}$      $\triangleright$ $\mathsf{T}$ stands for tmp

6:          $\mathsf{Rem}(X) \leftarrow \mathsf{Rem}(X) - \mathsf{T}(X)\mathsf{R}(X)$   $\triangleright$ Its leading coefficient is an encryption of $(0, \ldots, 0)$.

7:          $\mathsf{ct}_{\mathsf{Rem}} \leftarrow \mathsf{lc}(\mathsf{Rem}(X))$

8:          $\mathsf{Rem}(X) \leftarrow \mathsf{Rem}(X) - \mathsf{ct}_{\mathsf{Rem}} X^{\mathsf{Rem}(X)}$

9:      **end while**

10:      **return** $\mathsf{Rem}(X)$

11: **end procedure**

---

# FIG. 11

# FIG. 12

START

OBTAIN PLURALITY OF USER DATA AND PLURALITY OF VERIFICATION RANDOM DATA BY REPLICATING USER DATA AND VERIFICATION RANDOM DATA INTO PLURALITY OF USER DATA AND PLURALITY OF VERIFICATION RANDOM DATA, RESPECTIVELY, WHEN USER DATA IS OBTAINED — S1210

OBTAIN PLURALITY OF CIPHERTEXT SETS BY ENCRYPTING PLURALITY OF USER DATA AND PLURALITY OF VERIFICATION RANDOM DATA, RESPECTIVELY, UNDER DIFFERENT SECRET KEYS — S1220

TRANSMIT PLURALITY OF CIPHERTEXT SETS TO SERVER — S1230

END

## EUROPEAN SEARCH REPORT

Europäisches
Patentamt
European
Patent Office
Office européen
des brevets

**Application Number**

**EP 25 20 8495**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Chatel Sylvain ET AL: "Verifiable Encodings for Secure Homomorphic Analytics", arXiv.org, 1 June 2024 (2024-06-01), pages 1-26, XP093366442, Retrieved from the Internet: URL:https://arxiv.org/pdf/2207.14071 * page 4 - page 5; figure 2 * | 1-17 | INV. H04L9/00 H04L9/30 |
| X | SINEM SAV ET AL: "POSEIDON: Privacy-Preserving Federated Neural Network Learning", ARXIV.ORG, CORNELL UNIVERSITY LIBRARY, 201 OLIN LIBRARY CORNELL UNIVERSITY ITHACA, NY 14853, 8 January 2021 (2021-01-08), XP081854740, * section V, in particular Protocol 3 * | 1-17 | |
| A | WITTKOTTER ERLAND ERLAND WITTKOTTER@GMAIL COM: "WaC Trustworthy Encryption and Communication in an IT Ecosystem with Artificial Superintelligence", PROCEEDINGS OF THE 3RD WORKSHOP ON CYBER-SECURITY ARMS RACE, ACMPUB27, NEW YORK, NY, USA, 19 November 2021 (2021-11-19), pages 99-109, XP058768123, DOI: 10.1145/3474376.3487279 ISBN: 978-1-4503-8679-1 * section 3.3 * | 1-17 | **TECHNICAL FIELDS SEARCHED (IPC)** H04L |

The present search report has been drawn up for all claims

| Place of search | Date of completion of the search | Examiner |
|---|---|---|
| Munich | 19 February 2026 | Manet, Pascal |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Crypto dark matter on the torus: Oblivious PRFs from shallow PRFs and TFHE.. **ALBRECHT, M.R.** ; **DAVIDSON, A.** ; **DEO, A.** ; **GARDHAM, D.** Advances in Cryptology - EUROCRYPT 2024: 43rd Annual International Conference on the Theory and Applications of Cryptographic Techniques, Zurich, Switzerland, May 26-30, 2024, Proceedings, Part VI.. Springer-Verlag, 26 May 2024, 447-476

- **ATAPOOR, S.** ; **BAGHERY, K.** ; **PEREIRA, H.V.L** ; **SPIESSENS, J.** Verifiable FHE via latticebased SNARKs.. *IACR Communications in Cryptology*, 2024, vol. 1 (1), https://doi.org/10.62056/a6ksdkp10

- Exploring crypto dark matter: New simple PRF candidates and their applications.. **BONEH, D.** ; **ISHAI, Y.** ; **PASSELEGUE, A.** ; **SAHAI, A.** ; **WU, D.J.** Theory of Cryptography: 16th International Conference, TCC 2018, Panaji, India, November 11-14, 2018, Proceedings, Part II.. Springer-Verlag, 11 November 2018, 699-729

- leveled) fully homomorphic encryption without bootstrapping.. **BRAKERSKI, Z.** ; **GENTRY, C.** ; **VAIKUNTANATHAN, V.** Proceedings of the 3rd Innovations in Theoretical Computer Science Conference.. ITCS '12, Association for Computing Machinery, 2012, 309-325

- **CHATEL, S.** ; **KNABENHANS, C.** ; **PYRGELIS, A.** ; **TRONCOSO, C.** ; **HUBAUX, J.P.** VERITAS: Plaintext encoders for practical verifiable homomorphic encryption.. CCS'24, Association for Computing Machinery, 2024

- Labeled psi from fully homomorphic encryption with malicious security. **CHEN, H.** ; **HUANG, Z.** ; **LAINE, K** ; **RINDAL, P.** Proceedings of the 2018 ACM SIGSAC Conference on Computer and Communications Security.. CCS '18, Association for Computing Machinery, 2018, 1223-1237

- Homomorphic encryption for arithmetic of approximate numbers.. **CHEON, J.H.** ; **KIM, A.** ; **KIM, M.** ; **SONG, Y.** Advances in Cryptology - ASIACRYPT 2017. Springer International Publishing, 2017, 409-437

- **CHILLOTTI, I.** ; **GAMA, N.** ; **GEORGIEVA, M.** ; **IZABACHENE, M.** TFHE: Fast fully homomorphic encryption over the torus.. *J. Cryptol.*, January 2020, vol. 33 (1), 34-91, https://doi.org/10.1007/s00145-019-09319-x

- On the randomness of Legendre and Jacobi sequences.. **DAMGARD, I.B.** Advances in Cryptology - CRYPTO. Springer New York, 1990, vol. 88, 163-172

- **FAN, J.** ; **VERCAUTEREN, F.** Somewhat practical fully homomorphic encryption.. *Cryptology ePrint Archive, Paper 2012/144*, 2012, https://eprint.iacr.org/2012/144

- Pastro, V.: Efficiently verifiable computation on encrypted data.. **FIORE, D.** ; **GENNARO, R.** Proceedings of the 2014 ACM SIGSAC Conference on Computer and Communications Security.. CCS '14, Association for Computing Machinery, 2014, 844-855

- Boosting verifiable computation on encrypted data.. **FIORE, D.** ; **NITULESCU, A.** ; **POINTCHEVAL, D**. Public-Key Cryptography - PKC 2020. Springer International Publishing, 2020, 124-154

- **VON ZUR GATHEN, J.** ; **GERHARD, J.** Modern Computer Algebra.. Cambridge University Press, 2013

- **GEELEN, R.** ; **VERCAUTEREN, F.** Bootstrapping for BGV and BFV revisited.. *J. Cryptol.*, March 2023, vol. 36 (2), https://doi.org/10.1007/s00145-023-09454-6

- Non-interactive verifiable computing: Outsourcing computation to untrusted workers. **GENNARO, R.** ; **GENTRY, C.** ; **PARNO, B.** Advances in Cryptology - CRYPTO 2010. Springer Berlin Heidelberg, 2010, 465-482

- A classical introduction to modern number theory. **IRELAND, K.F.** ; **ROSEN, M.I.** ; **KENNETH IRELAND** ; **MICHAEL, MICHAEL ROSEN.** Graduate texts in mathematics. Springer, 1982, vol. 84

- **JOYE, M.** Guide to fully homomorphic encryption over the [discretized] torus.. *IACR Transactions on Cryptographic Hardware and Embedded Systems*, August 2022, vol. 2022 (4), 661-692, https://doi.org/10.46586/tches.v2022.i4.661-692

- **LINDELL, Y.** Fast cut-and-choose-based protocols for malicious and covert adversaries.. *J. Cryptol.*, April 2016, vol. 29 (2), 456-490, https://doi.org/10.1007/s00145-015-9198-0